# EUROPÄISCHE PATENTSCHRIFT

(11) **EP 2 474 685 B1**
(45) Veröffentlichungstag und Bekanntmachung des Hinweises auf die Patenterteilung: **26.04.2017**
(21) Anmeldenummer: 12000062.5
(22) Anmeldetag: 06.01.2012
(51) Int. Cl.: E04B 1/76, B25B 13/48, B25B 23/00, B25B 31/00, F16B 5/02

(54) **System, Werkzeug und Verfahren zum Befestigen von Dämmplatten mit vormontierten Befestigungselementen an einem Bauwerk**
System, tool and methods for fixing insulation boards provided with pre-mounted fixing elements onto a building
Système, outil et procédés de fixation de plaques isolantes équipées d'éléments de fixation pré-montés sur un bâtiment

(30) Priorität: 10.01.2011 EP 11000116
(43) Veröffentlichungstag der Anmeldung: 11.07.2012
(73) Patentinhaber: EJOT Baubefestigungen GmbH, 57334 Bad Laasphe (DE)
(72) Erfinder: TIEMANN, Jochim, 59846 Sundern (DE)
(74) Vertreter: Von Rohr Patentanwälte Partnerschaft mbB

(56) Entgegenhaltungen:
- WO-A1-99/35350
- DE-C1- 19 840 521
- DE-U1-202008 016 581
- FR-A1- 2 343 869
- US-A- 4 653 246
- US-A- 5 280 689

## Beschreibung

Die vorliegende Erfindung betrifft ein System zur Befestigung von Dämmplatten mittels Befestigungselementen an einem Bauwerk gemäß dem Oberbegriff des Anspruchs 1 sowie ein Verfahren zur Befestigung einer Dämmplatte an einem Bauwerk gemäß dem Oberbegriff des Anspruchs 9.

Die vorliegende Erfindung befasst sich generell mit der Befestigung von Dämmplatten an einem Bauwerk. Bei den Dämmplatten handelt es sich insbesondere um sogenannte Dämmstoffplatten oder Wärmedämmplatten. Jedoch kann es sich auch um sonstige Fassadenplatten o. dgl. handeln.

Die Dämmplatten sind üblicherweise aus einem verhältnismäßig weichen oder nicht hoch belastbaren Dämmstoff, wie expandiertes Polystyrol o. dgl., hergestellt. Dementsprechend ist eine sichere Befestigung wichtig.

Die Befestigung der Dämmplatten erfolgt an einem Bauwerk, insbesondere an einem Haus oder sonstigen Gebäude, an einer Fassade, Wand oder Decke. Jedoch kann die Befestigung vorzugsweise grundsätzlich auch an einer sonstigen Unterkonstruktion erfolgen. Der Begriff "Bauwerk" ist daher vorzugsweise in einem entsprechend weiten Sinne zu verstehen.

Üblicherweise werden die Dämmplatten an dem Bauwerk angeklebt und zusätzlich mit Dübeln gesichert. Die befestigten Dämmplatten werden dann üblicherweise verputzt. Wichtig ist unter anderem, dass eine gute Dämmung, insbesondere Wärmedämmung, erreicht wird, besonders bevorzugt keine Wärmebrücken gebildet werden, dass sich die Befestigungselemente, insbesondere Dübelteller o. dgl., von außen nicht abzeichnen und dass eine einfache baustellengerechte Befestigung bzw. Montage ermöglicht wird.

Die DE 195 36 171 A1 sieht Dübel mit Dübeltellern an der Dämmplattenoberfläche vor. Dies ist insbesondere im Hinblick auf Dübelabzeichnungen nachteilig.

Die EP 1 318 250 A2 sieht vor, dass Dübelteller ausgehend von der Außenseite der Dämmplatten versenkt und durch die Dämmplatten hindurch am Bauwerk angedübelt werden. Es sind lange Dübel erforderlich, wobei die Länge auch von der Dämmplattendicke abhängt.

Die DE 10 2007 000 758 A1 und die DE 10 2009 006 769 A1 sehen spezielle Plattendübel vor, die in die Dämmplatten eingeschraubt werden. Nachteilig ist hier insbesondere eine oftmalige Beschädigung der Dämmplatten bzw. Dämmplattenoberflächen bei der Montage.

Die EP 1 337 725 B1 sieht tellerartige Dübel vor, die zunächst an dem Bauwerk in einem vorbestimmten Dübelraster angedübelt werden. Dann wird ein Klebemörtel bzw. -stoff auf die Dübelköpfe aufgetragen, um die Dämmplatten anzukleben. Nachteilig ist hier insbesondere, dass keine definierte, sichere Klebeverbindung zwischen den Dübeln und Dämmplatten gewährleistet werden kann. Die Verklebung hängt nämlich maßgeblich vom handwerklichen Geschick des Verarbeiters vor Ort ab. Des Weiteren können die Klebstoffdicken sehr stark variieren, was dementsprechend zu Undefinierten Klebeverbindungen führt. Nachteilig ist außerdem, dass erst ein entsprechendes Dübelraster ausgemessen bzw. vorgegeben werden muss.

Die DE 100 00 059 A1 offenbart ein Befestigungselement zur Befestigung von Fassadenelementen bzw. Dämmplatten. Das Befestigungselement besteht aus einem rohrförmigen Schaft und zwei damit verbindbaren Tellern. Der rohrförmige Schaft durchgreift eine Bohrung der Dämmplatte. Die Teller sind auf entgegen gesetzten Seiten des rohrförmigen Schafts an den beiden Flachseiten der Dämmplatte angeordnet, um den rohrförmigen Schaft in der Dämmplatte zu fixieren. Das Befestigungselement weist eine Stellhülse auf, die in dem rohrförmigen Schaft - über Gewindeeingriff längsverstellbar - aufgenommen ist. Nach der Vormontage des Befestigungselements in der Dämmplatte wird die Dämmplatte an dem zugeordneten Mauerwerk angedübelt, wobei der Dübel durch eine Öffnung in dem Schaft und der Stellhülse geführt wird und an einem dieser beiden Teile eine Anlagefläche für einen Kopf der Dübelschraube angebracht ist. Nachteilig sind insbesondere der aufwendige Aufbau der Befestigungselemente, das vollständige Durchgreifen der Dämmplatten mit dem Risiko von unerwünschten Abzeichnungen auf der Außenseite und die aufwendige Montage. Weiter ist kein Ankleben vorgesehen.

Die DE 10 2004 019 782 A1 offenbart eine Wärmedämmplatte, wobei Teller auf beiden Flachseiten durch eine Koppeltraverse zur Übertragung von Zugkräften verbunden werden. Nachteilig sind insbesondere der aufwendige Aufbau und das vollständige Durchgreifen der Dämmplatten mit dem Risiko von unerwünschen Abzeichnungen auf der Außenseite.

Die DE 198 40 521 C1 offenbart ein Befestigungselement zur Befestigung einer Dämmstoffplatte an einer Unterkonstruktion, wobei die Dämmstoffplatte von einer Hülse vollständig durchdrungen wird und mit einem Flansch in die Außerseite der Dämmstoffplatte eingedrückt wird. Nachteilig sind insbesondere der aufwendige Aufbau und das vollständige Durchgreifen der Dämmstoffplatte mit dem Risiko von unerwünschten Abzeichnungen auf der Außenseite.

Die EP 0 581 664 A1 offenbart eine Dämmplatte mit einem eingeschäumten Befestigungselement und einem bauwerksseitigen Vorsprung zur Führung einer Schraube zur Verbindung mit einer Unterkonstruktion. Nachteilig sind die aufwendige Herstellung und Montage.

Die DE 20 2008 016 581 U1 offenbart ein Verkleidungssystem, wobei insbesondere stegartige Fixierelemente klemmend in schlitzartigen, bauwerksseitigen Ausnehmungen einer Verkleidungsplatte aufgenommen werden. Eine bauwerksseitige Verdübelung ist nicht vorgesehen. Die Montage ist sehr aufwendig. Eine definierte, hoch belastbare Verbindung ist allenfalls nur sehr schwierig erreichbar.

Die WO 99/35350 A1 offenbart ein Trägerelement, insbesondere zur Befestigung von Unterkonstruktionen für Fassadenbekleidungen, Dachelemente, Fußböden u. dgl., mit einem streifenförmigen Dämmstoffstreifen, wobei das Trägerelement aus dem Dämmstoffstreifen und einem darüber angeordneten und mit dem Dämmstoffstreifen verbundenen Trägerstreifen besteht, wobei der Trägerstreifen mit dem Dämmstoffstreifen verklebt ist und an den Trägerstreifen Einsenkungen zur Aufnahme von Befestigungsmitteln, wie Dübel, vorgesehen sind, welche zur Befestigung des Trägerelements an tragenden Gebäudeteilen dienen.

Die FR 2 343 869 offenbart eine mehrschichtige Dämmplatte, wobei die äußeren Schichten der Dämmplatte zur Befestigung der Dämmplatte an einem Bauwerk und/oder von weiteren Elementen an der Dämmplatte ausgebildet sind.

Die US 5,280,689 offenbart eine vorgefertigte mehrschichtige Dämmplatte, wobei auf der Bauwerkseite der Dämmplatte Befestigungswinkel zur Befestigung der Dämmplatte an der Außenseite eines Bauwerks vorgesehen sind. Die Befestigungswinkel ragen von der Dämmplatte ab, so dass die Dämmplatte an einem Bauwerk eingehängt werden kann.

Die US 4,653,246 offenbart ein gattungsgemäßes System zur Befestigung von Dämmplatten mittels Befestigungselementen an einem Bauwerk.

Der vorliegenden Erfindung liegt die Aufgabe zugrunde, ein System Befestigung von Dämmplatten und ein Verfahren zum Befestigen von Dämmplatten vorzuschlagen, wobei eine einfache und schnelle Montage insbesondere vor Ort ermöglicht wird, wobei eine industrielle bzw. werksseitige Vormontage ermöglicht wird, wobei eine sichere Befestigung ermöglicht wird und/oder wobei ein Abzeichnen von Befestigungselementen und/oder sonstige Nachteile des Standes der Technik vermieden oder zumindest minimiert werden.

Die obige Aufgabe wird durch ein System gemäß Anspruch 1 oder ein Verfahren gemäß Anspruch 9 gelöst. Vorteilhafte Weiterbildungen sind Gegenstand der Unteransprüche.

Ein bevorzugter Aspekt der vorliegenden Erfindung liegt darin, dass vormontierte Baueinheiten aus den Dämmplatten und Befestigungselementen gebildet werden, wobei die Befestigungselemente mit den Wärmedämmplatten verklebt oder auf sonstige Weise materialschlüssig, d. h. stoff- und/oder formschlüssig, verbunden werden und/oder nur bauwerksseitig oder bauwerksnah an oder in den Dämmplatten angeordnet werden. Unter dem Begriff "materialschlüssig" ist insbesondere ein sonstiges Verbinden durch Verschweißen, Anformen o. dgl. zu verstehen. Beispielsweise können die Befestigungselemente auch von einem entsprechend steifer und/oder härter ausgebildeten Bereich oder einer entsprechenden Schicht oder Einlage der Dämmplatten gebildet werden. Jedoch soll der Begriff "materialschlüssig" kein Durchgreifen der Dämmplatte umfassen. Besonders bevorzugt erfolgt die Vormontage werksseitig bzw. industriell, also insbesondere nicht vor Ort auf einer Baustelle. So kann eine optimale, sichere und/oder definierte Verbindung bzw. Verklebung der Befestigungselemente mit den Dämmplatten gewährleistet werden.

Die vormontierten Baueinheiten - also die mit dem Befestigungselementen bereits versehenen Dämmplatten - werden vorzugsweise an dem zugeordneten Bauwerk angeklebt und/oder angedübelt. So kann auf einfache Weise bzw. mit geringem Aufwand vor Ort eine optimale, sichere und/oder definierte Befestigung der Dämmplatten an dem zugeordneten Bauwerk realisiert werden. Grundsätzlich ist es jedoch auch möglich, die Dämmplatten oder einzelne Dämmplatten oder Dämmplattenstücke erst vor Ort, ggf. auch nach einem entsprechenden Zuschneiden, mit den Befestigungselementen zu versehen, beispielsweise mit Hilfe einer Klebefolie. Bedarfsweise können die Befestigungselemente hierzu auch mit einer entsprechenden Klebefolie vorkonfiguriert bzw. versehen sein.

Erfindungsgemäß werden die Befestigungselemente angedübelt. Dies erfolgt besonders bevorzugt mittels üblichen Standarddübeln und Schrauben, so dass keine speziellen Dübel, speziellen Schrauben oder sonstigen Spezialteile erforderlich sind. Dies verringert die Kosten und vereinfacht die Lagerhaltung. Insbesondere sind die erforderlichen Dübel und Schrauben unabhängig von der Dicke der Dämmplatten, was wiederum die Kosten reduziert und die Lagerhaltung vereinfacht.

Das Befestigungselement ist vorzugsweise zumindest im Wesentlichen flach, plattenartig und/oder tellerartig ausgebildet, insbesondere zur zumindest im Wesentlichen ausschließlichen Anbringung an einer Flachseite bzw. der Bauwerkseite der jeweiligen Dämmplatte. Dies vereinfacht die Anbringung des Befestigungselements an der Dämmplatte und vereinfacht die Befestigung der Dämmplatten und Befestigungselemente an dem Bauwerk. Es können aber auch Verstärkungselemente, wie Rippen o. dgl., am Befestigungselement vorgesehen werden, um die Steifigkeit zu erhöhen. Die Dämmplatte kann zusammen mit dem Befestigungselement in üblicher Weise aufgeklebt und anschließend mit dem Bauwerk verdübelt werden. Dies gestattet eine sehr einfache und/oder baustellengerechte Befestigung.

Das Befestigungselement weist eine Durchbrechung zur Verbindung des Befestigungselements mit dem Bauwerk und einen einstückig angeformten, sich an die Durchbrechung dämmplattenseitig anschließenden Vorsprung mit einer inneren Einführschräge auf. Der Vorsprung ist insbesondere hülsenartig und/oder dickwandig ausgebildet und erstreckt sich insbesondere quer, besonders bevorzugt senkrecht, zu der Flächenerstreckung des Befestigungselements. Weiter ist die Einführschräge vorzugsweise konisch ausgebildet. Dies gestattet einen sehr einfachen und/oder kostengünstigen Aufbau.

Der Vorsprung bildet ein Positioniermittel, um das Befestigungselement definiert an der Dämmplatte anzuordnen, insbesondere koaxial zu einer Durchbrechung der Dämmplatte. Die Durchbrechung ist insbesondere als Bohrung ausgeführt. Das Befestigungselement ist insbesondere mit dem Vorsprung in die Durchbrechung bauwerksseitig eingeführt. Der Außendurchmesser des Vorsprungs stimmt vorzugsweise zumindest im Wesentlichen mit einem Durchmesser der Durchbrechung überein, um ein einfaches Einführen und/oder ausreichend genaues Positionieren sicherzustellen.

Die Durchbrechung in der Dämmplatte ist vorzugsweise nur durch den Dämmstoff der Dämmplatte begrenzt. Der Dämmstoff und der Vorsprung mit der Einführschräge bilden vorzugsweise eine Führung, um ein Anbohren des Bauwerks durch das Befestigungselement hindurch zu ermöglichen und/oder ein Andübeln des Befestigungselements am Bauwerk zu ermöglichen.

Vorzugsweise werden die mit den Befestigungselementen versehenen Dämmplatten an dem Bauwerk angeklebt und anschließend mit dem Bauwerk insbesondere durch eine Dübelverbindung verbunden. Hierzu wird nach dem Ankleben zunächst in das Bauwerk durch das Befestigungselement hindurch gebohrt. Hierbei kann gleichzeitig auch die Dämmplatte durchbohrt werden, sofern im Bereich der Bohrung nicht bereits eine entsprechende Durchbrechung in der Dämmplatte vorhanden ist.

Nach dem Bohren wird ein Dübel mit einem vorzugsweise bereits voreingesetzten Spreizelement, wie einer bereits teilweise eingeschraubten Schraube, eingeführt, so dass der Dübel mit einem aufgeweiteten Kopfbereich dämmplattenseitig an der Einführschräge des Befestigungselements zur Anlage kommt und sich in das Bohrloch im Bauwerk erstreckt. Beim Einführen wird Dämmmaterial der Dämmplatte bedarfsweise von dem verbreiterten Dübelkopf verdrängt, sofern keine im Durchmesser entsprechend größer ausgebildete Durchbrechung in der Dämmplatte - ausgehend von der Außenseite bis zum Befestigungselement hin - gebildet ist. Bei dem Einführen wird der Dübel vorzugsweise von der Dämmplatte bzw. dem Dämmstoff der Dämmplatte, sowie der vorgesehenen Einführschräge und dem optional vorgesehenen Vorsprung des Befestigungselements und/oder von dem Befestigungselement seitlich geführt, so dass der Dübel verhältnismäßig leicht in das im Bauwerk gebildete Bohrloch einführbar ist. Weiter bildet die Dämmplatte bzw. deren Dämmstoff alternativ oder zusätzlich vorzugsweise eine seitliche Führung für ein Werkzeug zum Andübeln, insbesondere Einführen des Dübels, und/oder zum Einführen eines Spreizelements in den Dübel, insbesondere Einschrauben der Schraube in den Dübel. Dementsprechend wird eine sehr einfache, schnelle und/oder baustellengerechte Befestigung der Dämmplatten an dem Bauwerk ermöglicht.

Vorzugsweise wird ein insbesondere im vorgenannten Sinne ausgestaltetes Befestigungselement zur Befestigung einer Dämmplatte an einem Bauwerk verwendet, wobei das Befestigungselement bauwerksseitig an der Dämmplatte angebracht wird und mit einem Vorsprung in die Dämmplatte hinein vorspringt, wobei der Vorsprung mit einer Einführschräge versehen ist und wobei das Befestigungselement durch den Vorsprung und eine sich anschließende Durchbrechung hindurch mit dem Bauwerk verbundenen bzw. verdübelt wird. Besonders bevorzugt wird die mit dem Befestigungselement versehene Dämmplatte zunächst an dem Bauwerk angeklebt und dann in der beschriebenen Weise damit verdübelt. Dies gestattet eine sehr einfache und effiziente Montage bzw. Befestigung, insbesondere unter Verwendung von üblichen Dübeln und Schrauben.

Vorzugsweise wird ein Werkzeug zur Befestigung von Dämmplatten mit bauwerksseitigen oder bauwerksnahen Befestigungselementen an einen Bauwerk verwendet, wobei das Werkzeug in einer entsprechenden Bohrung oder Durchbrechung der jeweiligen Dämmplatte von dem Dämmstoff zur Verbindung, insbesondere Verdübelung, des der Bohrung bzw. Durchbrechung zugeordneten Befestigungselements mit dem Bauwerk geführt wird. Dies ermöglicht eine sehr einfache und effiziente Montage, insbesondere unter Verwendung von üblichen Dübeln und Schrauben, besonders bevorzugt unabhängig von der Dämmplattendicke.

Die vorliegende Erfindung betrifft insbesondere ein Dämmsystem zur Dämmung eines Bauwerks, insbesondere eines Hauses o. dgl., wobei Dämmplatten mittels Befestigungselementen an dem Bauwerk befestigt werden oder sind. Besonders bevorzugt werden oder sind die Befestigungselemente durch Dübelverbindungen mit dem Bauwerk verbunden bzw. an diesem angedübelt. Bedarfsweise umfasst das vorschlagsgemäße Dämmsystem auch das Bauwerk selbst. Weitere Aspekte, Merkmale, Eigenschaften und Vorteile der vorliegenden Erfindung ergeben sich aus den Ansprüchen und werden nachfolgend anhand der Zeichnung bevorzugter Ausführungsformen näher erläutert. Es zeigt:
- Fig. 1: einen schematischen Schnitt eines Teils eines vorschlagsgemäßen Systems mit einer an einem Bauwerk angeklebten Dämmplatte und einer Bohrung in das Bauwerk durch ein mit der Dämmplatte verbundenes Befestigungselement hindurch;
- Fig. 2: einen zu Fig. 1 korrespondierenden schematischen Schnitt des Systems beim Einführen eines Dübels in die Dämmplatte;
- Fig. 3: einen zu Fig. 1 korrespondierenden Schnitt des Systems mit in das Befestigungselement eingeführtem Dübel;
- Fig. 4: einen zu Fig. 1 korrespondierenden schematischen Schnitt des Systems mit in das Bohrloch eingeführtem Dübel;
- Fig. 5: einen zu Fig. 1 korrespondierenden schematischen Schnitt des Systems mit in den Dübel eingeschraubter Schraube;
- Fig. 6: einen zu Fig. 1 korrespondierenden schematischen Schnitt des fertigen Systems;
- Fig. 7: eine schematische Draufsicht der Dämmplatte mit vormontierten Befestigungselementen von einer Bauwerkseite;
- Fig. 8: eine schematische Draufsicht der Dämmplatte gemäß Fig. 7 von einer Außenseite;
- Fig. 9: eine schematische Draufsicht der Dämmplatte mit vormontierten Befestigungselementen von einer Bauwerkseite gemäß einer anderen Ausführungsform;
- Fig. 10: einen schematischen Schnitt der Dämmplatte gemäß Fig. 9 entlang der Schnittlinie X-X;
- Fig. 11: eine perspektivische Ansicht eines vorschlagsgemäßen Werkzeugs gemäß einer anderen Ausführungsform; und
- Fig. 12: einen schematischen Schnitt des Werkzeugs gemäß Fig. 11.

In den Figuren werden für gleiche Bauteile die gleichen Bezugszeichen verwendet, wobei sich entsprechende oder gleiche Vorteile ergeben, auch wenn eine wiederholte Beschreibung weggelassen ist.

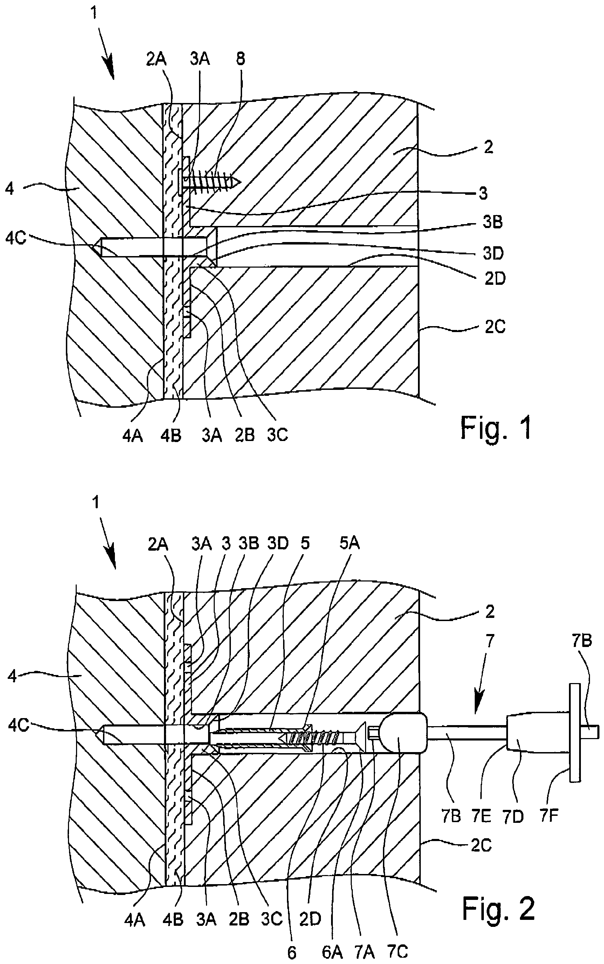

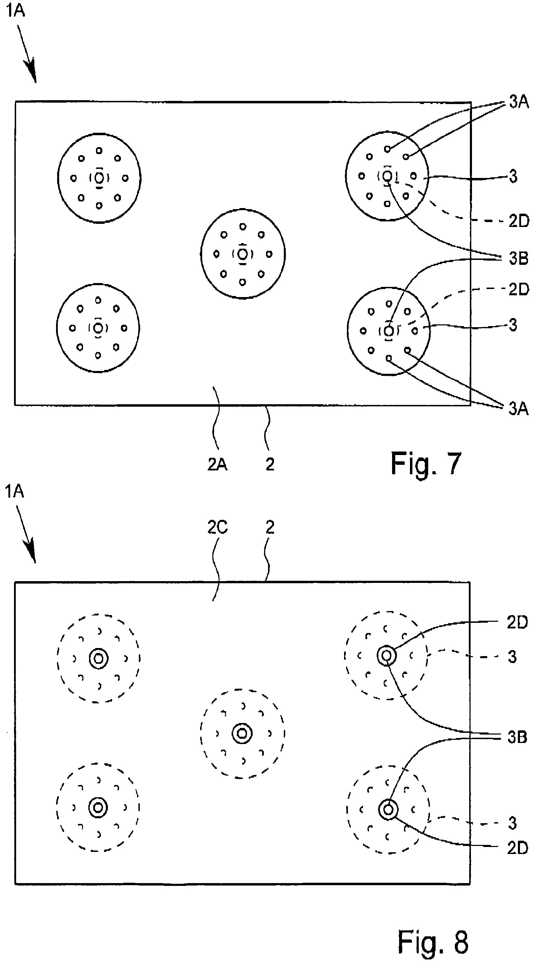

Fig. 1 zeigt in einem sehr schematischen, nicht maßstabsgerechten Schnitt eine bevorzugte Ausführungsform eines vorschlagsgemäßen Dämmsystems bzw. Systems 1 zur Befestigung von Dämmplatten 2 mittels Befestigungselementen 3 an einem Bauwerk 4. Dargestellt ist in Fig. 1 ein Ausschnitt bzw. Teil des Systems 1 bzw. einer Dämmplatte 2 mit einem Befestigungselement 3 bzw. im Bereich eines Befestigungselements 3. Vorzugsweise sind einer Dämmplatte 2 bzw. jeder Dämmplatte 2 mehrere Befestigungselemente 3 zugeordnet, wie beispielhaft in der Draufsicht gemäß Fig. 7 gezeigt.

Nachfolgend wird primär nur auf eine Dämmplatte 2 und ein Befestigungselement 3 zur Befestigung der Dämmplatte 2 Bezug genommen, auch wenn das System 1 vorzugsweise oder üblicherweise mehrere Dämmplatten 2 umfasst, die insbesondere auf Stoß angeordnet werden und/oder eine möglichst durchgehende Dämmschicht zur Dämmung des Bauwerks 4 bilden.

Die Dämmplatte 2 dient insbesondere der Wärmedämmung bzw. Wärmeisolierung. Die Dämmplatte 2 ist aus einem entsprechenden Dämmstoff hergestellt, insbesondere besteht die Dämmplatte 2 im Wesentlichen oder ausschließlich aus diesem Dämmstoff. Vorzugsweise wird ein geschäumter Dämmstoff, wie expandiertes Polystyrol, o. dgl. eingesetzt.

Die Dämmplatte 2 ist vorzugsweise zumindest im Wesentlichen quadratisch oder rechteckig ausgebildet, wie aus der Draufsicht gemäß Fig. 7 ersichtlich. Jedoch kann die Dämmplatte 2 grundsätzlich auch jede sonstige Form aufweisen.

Die Dämmplatte 2 weist üblicherweise eine Dicke von mehreren cm, beispielsweise von 6 bis 30 cm, meistens etwa von 10 bis 16 cm, auf.

Die Dämmplatte 2 wird mit einer Flachseite am Bauwerk 4 befestigt. Diese Flachseite der Hauptseite wird hier als Bauwerkseite 2A bezeichnet.

Bei dem Bauwerk 4 handelt es sich insbesondere um ein Gebäude, eine Mauer, eine Wand, besonders bevorzugt eine Außenwand, eine Decke o. dgl. Die Dämmplatte 2 kann mit ihrer Bauwerkseite 2A unmittelbar an dem Bauwerk 4 bzw. deren Oberfläche 4A angebracht werden. Jedoch kann zwischen dem Bauwerk 4 und der Dämmplatte 2 - zumindest bereichsweise, ggf. aber auch vollflächig - ein Hohlraum oder eine Schicht 4B, wie eine Zwischenschicht oder Verbindungsschicht, besonders bevorzugt zum Ausgleichen von Unebenheiten und/oder zum Verbinden bzw. Verkleben, wie in Fig. 1 angedeutet, vorgesehen sein. Besonders bevorzugt ist die Dämmplatte 2 mit dem Bauwerk 4 bzw. dessen Oberfläche 4A verklebt oder auf sonstige Weise, insbesondere materialschlüssig, verbunden.

Die Oberfläche 4A des Bauwerks 4 kann insbesondere von einem Putz, von Mauerwerk oder dergleichen gebildet sein. Insbesondere kann die Oberfläche 4A eine Fassade des Bauwerks 4 bilden oder darstellen.

Das Befestigungselement 3 ist vorzugsweise zumindest im Wesentlichen flach, gitterartig, rippenartig, plattenartig und/oder tellerartig ausgebildet. Beim Darstellungsbeispiel ist das Befestigungselement 3 insbesondere im Wesentlichen scheibenartig bzw. kreisscheibenartig ausgebildet, wie aus Fig. 1 und 7 ersichtlich.

Das Befestigungselement 3 ist vorzugsweise zumindest im Wesentlichen auf der Bauwerkseite 2A der Dämmplatte 2 oder bauwerksnah in der Dämmplatte 2 bzw. benachbart zur Bauwerksseite 2A angeordnet. Das Befestigungselement 3 kann grundsätzlich auf der Bauwerkseite 2A erhaben angeordnet werden oder - wie beim Darstellungsbeispiel - in eine entsprechende Vertiefung oder Aussparung 2B der Dämmplatte 2 eingesetzt oder eingedrückt sein. Die Vertiefung oder Aussparung 2B kann vor dem Anbringen des Befestigungselements 3 an der Dämmplatte 2 oder durch entsprechendes Eindrücken des Befestigungselements 3 gebildet sein. Die Vertiefung bzw. Aussparung 2B weist vorzugsweise entsprechend der geringen Dicke des Befestigungselements 3 eine nur verhältnismäßig geringe oder entsprechende Tiefe auf. Die Dicke bzw. Tiefe beträgt beispielsweise nur einige mm, insbesondere etwa 1 bis 8 mm.

Vorzugsweise wird das Befestigungselement 3 mit seiner Hauptebene bzw. Plattenebene oder Haupterstreckungsebene parallel oder flach auf der Bauwerksseite 2A bzw. der Dämmplatte 2 oder an bzw. in der Dämmplatte 2 bzw. parallel zu deren Haupterstreckungsebene oder Plattenebene angeordnet.

Das Befestigungselement 3 ist bzw. wird vorzugsweise durch Kleben mit der Dämmplatte 2 verbunden, also mit der Dämmplatte 2 verklebt. Insbesondere ist das Befestigungselement 2 bauwerksseitig oder auf der Bauwerksseite 2A oder in der Aussparung 2B mit den Dämmplatten 2 verklebt.

Ein entsprechender Klebstoff bzw. die Klebeverbindung ist in den nur schematischen Figuren nicht dargestellt. Das Befestigungselement 3 kann auch Hinterschnitte, Ausnehmungen 3A o. dgl., aufweisen, um eine besonders gute Verbindung, insbesondere durch Kleben, mit der Dämmplatte 2 zu ermöglichen.

Zusätzlich zum Kleben können auch formschlüssige Zusatzverbindungen eingesetzt werden, beispielsweise eine oder mehrere Spiralen, Kammern (in Fig. 1 ist beispielhaft eine solche Verbindung bzw. Spirale 8 gezeigt) o. dgl., die das Befestigungselement 3 mit der Dämmplatte 2 zusätzlich zu der bevorzugten Klebeverbindung formschlüssig verbinden.

Zum Verkleben des Befestigungselements 3 mit der Dämmplatte 2 weist das Befestigungselement 3 vorzugsweise eine plattenartige Gestaltung oder einen Plattenabschnitt auf, um eine verhältnismäßig große dämmplattenseitige Klebefläche zu bilden. Alternativ oder zusätzlich bildet das Befestigungselement 3 bzw. dessen Plattenabschnitt vorzugsweise eine verhältnismäßig große Klebefläche, um das Befestigungselement 3 am Bauwerk 4 ankleben zu können, insbesondere für eine erste Befestigung des Befestigungselements 3 und der zugeordneten Dämmplatte 2 am Bauwerk 4.

Das Befestigungselement 3 wird vor dem Befestigen der Dämmplatte 2 an dem Bauwerk 4 mit der Dämmplatte 2 verbunden. Vorzugsweise werden vormontierte Baueinheiten 1A aus den Dämmplatten 2 und den zugeordneten Befestigungselementen 3 gebildet. Dies erfolgt insbesondere werksseitig bzw. nicht vor Ort auf einer Baustelle, sondern insbesondere vor der Verpackung und Auslieferung der Dämmplatten 2. Fig. 7 zeigt beispielhaft eine derartige vormontierte Baueinheit 1A. Beim Darstellungsbeispiel sind mehrere Befestigungselemente 3 an der zugeordneten Dämmplatte 2 befestigt. Jedoch kann die Dämmplatte 2 grundsätzlich auch nur mit einem Befestigungselement 3 versehen werden.

Wie bereits erwähnt werden die Befestigungselemente 3 vorzugsweise durch Ankleben an der zugeordneten Dämmplatte 2 befestigt bzw. mit dieser verbunden. Jedoch kann grundsätzlich stoff- oder formschlüssige Verbindung mit der Dämmplatte 2, beispielsweise durch Verschweißen o. dgl. erfolgen. Insbesondere können die Befestigungselemente 3 - zumindest im Wesentlichen oder vollständig - in die Dämmplatte 2 eingebracht, eingebettet oder eingeschäumt sein, besonders bevorzugt bauwerksnah bzw. benachbart zu der Bauwerksseite 2A.

Beim Darstellungsbeispiel ist das Befestigungselement 3 vorzugsweise als separates Teil ausgebildet und/oder aus einem vorzugsweise relativ festen Kunststoff und/oder aus einem anderen Material als die Dämmplatten 2 hergestellt. Vorzugsweise ist das Befestigungselement 3 spritzgegossen. Gemäß einer nicht dargestellten Ausführungsalternative kann das Befestigungselement 3 jedoch auch einstückig mit der Dämmplatte 2 ausgebildet sein, beispielsweise durch eine entsprechend verstärkte oder festere bzw. verfestigte, ggf. auch durchgehende Schicht der Dämmplatte 2 oder durch lokale Verstärkungen, Einlagen o. dgl. gebildet sein.

Das Befestigungselement 3 weist eine Durchbrechung 3B auf, um das Befestigungselement 3 mit dem Bauwerk 4, mittels einer Dübelverbindung, verbinden zu können. Die Durchbrechung 3B ist vorzugsweise zentrisch am oder im Befestigungselement 3 angeordnet und/oder insbesondere schon herstellungsmäßig in dem Befestigungselement 3 gebildet, kann jedoch alternativ auch erst vor Ort bei der Befestigung an dem Bauwerk 4, beispielsweise durch Bohren, gebildet oder geöffnet werden.

Das Befestigungselement 3 weist ein Positioniermittel auf, das hier durch einen Vorsprung 3C gebildet ist. Das Positioniermittel dient vorzugsweise einer Positionierung des Befestigungselements 3 an der Dämmplatte 2, insbesondere bezüglich einer vorgeformten Durchbrechung 2D der Dämmplatte 2, und/oder einer Positionierung, Führung und/oder Widerlagerung eines Verbindungsmittels, wie eines Dübels 5 und/oder einer Schraube 6 zur Verbindung des Befestigungselements 3 mit dem Bauwerk 4.

Beim Darstellungsbeispiel ist das Positioniermittel bzw. der Vorsprung 3C einstückig an das Befestigungselement 3 angeformt bzw. angespritzt und dämmplattenseitig angeordnet. Z r Erfindungsgemäß schließt sich der Vorsprung 3C dämmplattenseitig an die Durchbrechung 3B des Befestigungselements 3 an oder bildet diese.

Der Vorsprung 3C ist vorzugsweise hülsenartig bzw. hohlzylindrisch und/oder dickwandig ausgebildet.

Das Positioniermittel bzw. der Vorsprung 3C ist mit einer inneren Einführschräge 3D versehen. Diese ist insbesondere zumindest im Wesentlichen konisch ausgebildet. Jedoch kann diese auch durch über den Umfang verteilte Führungsrippen, Schrägen o. dgl. gebildet sein.

Das Befestigungselement 3 wird mit seinem Positioniermittel bzw. Vorsprung 3C in die zugeordnete Durchbrechung 2D der Dämmplatte 2 eingeführt. Die Durchbrechung 2D ist insbesondere durch eine Durchgangsbohrung gebildet. Die Durchbrechung 2D erstreckt sich quer bzw. senkrecht zur Plattenebene und/oder verbindet die beiden Flachseiten 2A und 2C der Dämmplatte 2.

Das Positioniermittel bzw. der Vorsprung 3C ist vorzugsweise relativ kurz ausgebildet, insbesondere beträgt die axiale Länge im Wesentlichen nur 0,5 bis 4 cm. Positioniermittel bzw. der Vorsprung 3C ist vorzugsweise kurz im Verhältnis zur Dicke der Dämmplatte 2 bzw. Länge der Durchbrechung 2D ausgebildet. Das Positioniermittel bzw. der Vorsprung 3C kann aber insbesondere zur besseren Führung auch länger gestaltet sein.

Die Dämmplatte 2 wird zuerst mit der Durchbrechung 2D bzw. mehreren Durchbrechungen 2D versehen, insbesondere durch entsprechendes Bohren. Anschließend erfolgt bei der Vormontage die Befestigung des Befestigungselements 3 bzw. der Befestigungselemente 3 an der Dämmplatte 2. Hierzu wird das jeweilige Befestigungselement 3 mit seinem Positioniermittel bzw. Vorsprung 3C in die zugeordnete Durchbrechung 2D bauwerksseitig - also ausgehend von der Bauwerkseite 2A der Dämmplatte 2 - einführt. Der Außendurchmesser des Positioniermittels bzw. Vorsprungs 3C ist entsprechend an den lichten oder inneren Durchmesser der Durchbrechung 2D angepasst. So kann eine sehr einfache und schnelle Positionierung erfolgen. Das auf der Bauwerkseite 2A entsprechend positionierte Befestigungselement 3 wird mit der Dämmplatte 2 verbunden, insbesondere verklebt, wie bereits erwähnt. So wird die vormontierte Baueinheit 1A aus Dämmplatte 2 und Befestigungselement(en) 3 hergestellt. Dies erfolgt insbesondere werksseitig. Vorzugsweise ist der Durchmesser der Durchbrechung 2D mehr als 25 %, insbesondere mehr als 50 %, größer als der Durchmesser der Durchbrechung 3B, so dass das Einführen des Dübels 5 und der Schraube 6 oder eines sonstigen Verbindungselements erleichtert und/oder insbesondere ohne Verformung der Dämmplatte 2 bzw. des Dämmstoffs durch die Durchbrechung 2D ermöglicht wird und/oder so dass die Durchbrechung 2D Bohrmehl bzw. -staub beim Bohren in das Bauwerk 4 aufnehmen kann.

Nach der Vormontage werden die Baueinheiten 1A bzw. die mit den Befestigungselementen 3 versehenen Dämmplatten 2 an dem Bauwerk 4 befestigt. Dies wird nachfolgend unter Bezugnahme auf Fig. 1 bis 6 näher erläutert. Die vormontierte, also mit Befestigungselementen 3 versehene Dämmplatte 2 bzw. Baueinheit 1A wird am Bauwerk 4 befestigt. Besonders bevorzugt wird die Dämmplatte 2 am Bauwerk 4 bzw. dessen Oberfläche 4A angeklebt. So wird eine erste oder hilfsweise bzw. temporäre Verbindung der Dämmplatte 2 mit dem Bauwerk 4 erreicht. Insbesondere dient hierbei die optionale Schicht 4B dem Verkleben und/oder Ausgleich von Unebenheiten o. dgl. Dieses erste bzw. temporäre Verbinden kann jedoch auch auf sonstige geeignete Art und Weise erfolgen oder alternativ durch ein Halten der jeweiligen Dämmplatte 2 am Bauwerk 4 erreicht werden.

Anschließend wird das Befestigungselement 3 mit dem Bauwerk 4 (dauerhaft oder hoch belastbar oder zusätzlich) verbunden, durch eine Dübelverbindung.

Dieses (zweite) Verbinden der Dämmplatte 2 zusätzlich zu dem Verkleben erfolgt vorzugsweise bei allen Befestigungselementen 3, auch wenn dies nachfolgend beispielhaft nur für ein Befestigungselement 3 beschrieben wird.

Beim Darstellungsbeispiel wird in einem ersten Schritt durch die Dämmplatte 2 bzw. deren Durchbrechung 2D und das Befestigungselement 3 hindurch in das Bauwerk 4 gebohrt, um ein Bohrloch 4C in dem Bauwerk 4 zu erzeugen, wie beispielhaft in Fig. 1 dargestellt. Der entsprechende Bohrer ist in Fig. 1 nicht dargestellt. Die Positionierung des Bohrers wird jedoch durch das Positioniermittel bzw. den Vorsprung 3C bzw. die Einführschräge 3D ermöglicht oder erreicht, so dass von außen sehr einfach durch das Befestigungselement 3 hindurch in das Bauwerk 4 - mit der gewünschten Tiefe - gebohrt werden kann.

In einem zweiten Schritt wird dann der Dübel 5, vorzugsweise mit vormontiertem Spreizelement, insbesondere mit teilweise eingeschraubter Schraube 6, in die Dämmplatte 2 bzw. deren Durchbrechung 2D eingeführt. Dies kann sehr einfach manuell erfolgen und ist insbesondere aufgrund des relativ großen Durchmessers der Durchbrechung 2D sehr einfach möglich. Zum weiteren Einführen wird dann vorzugsweise ein Werkzeug 7 eingesetzt. Dies ist beispielhaft in Fig. 2 dargestellt, die einen schematischen Schnitt (Ausschnitt) entsprechend Fig. 1 zeigt.

Als Werkzeug 7 kann beispielsweise ein Schraubendreher oder sonstiges auf der Baustelle verfügbares Handwerkzeug eingesetzt werden. Vorzugsweise wird jedoch ein Werkzeug 7 eingesetzt, das vorzugsweise sowohl zum (korrekten) Einführen als auch zum Verspannen oder Festziehen der Dübelverbindung, insbesondere zum Einschrauben, einsetzbar ist.

Das vorschlagsgemäß besonders bevorzugt eingesetzte Werkzeug 7 weist beim Darstellungsbeispiel einen Werkzeugkopf 7A, einen Schaft 7B, einen ersten Führungsabschnitt 7C, einen zweiten Führungsabschnitt 7D, ein erstes Markiermittel 7E und/oder ein zweites Markiermittel 7F auf.

Bei dem Werkzeugkopf 7A handelt es sich vorzugsweise um einen Bit, einen sogenannten Sechsrund oder sonstigen Einsatz bzw. Mehrkantschlüssel, der insbesondere formschlüssig bzw. drehfest mit dem Spreizelement bzw. der Schraube 6 bzw. dessen Kopf 6A in Eingriff bringbar ist und/oder der vorzugsweise auswechselbar ist.

Das Werkzeug 7 bzw. der Schaft 7B ist vorzugsweise zur Aufnahme in einen Schrauber o. dgl. ausgebildet und/oder vorzugsweise zumindest bereichsweise als Mehrkant ausgeführt.

Der erste Führungsabschnitt 7C ist vorzugsweise durch einen entsprechenden Körper, vorzugsweise aus Kunststoff, gebildet und/oder im Bereich einer Aufnahme für den Werkzeugkopf 7A angeordnet. Der erste Führungsabschnitt 7C gestattet insbesondere eine seitliche Führung und/oder Zentrierung des Werkzeugkopfs 7A, insbesondere zur zentrischen Ausrichtung zum Schraubenkopf 6A. Die Schraube 6 wird ihrerseits durch das Befestigungselement 3 bzw. die Durchbrechung 3B bzw. die Einführschräge 3D, insbesondere mittels des darin eingeführten Dübels 5 oder daran anliegenden Dübels 5, zentrisch oder koaxial gehalten bzw. geführt.

Der zweite Führungsabschnitt 7D ist vorzugsweise axial verstellbar, insbesondere mittels einer nicht dargestellten Madenschraube o. dgl., am Werkzeug 7 oder dessen Schaft 7B festlegbar, insbesondere zur Anpassung an verschiedene Dämmplattendicken. Der zweite Führungsabschnitt 7D gestattet insbesondere eine zusätzliche seitliche Führung in der Durchbrechung 2D bzw. im Dämmstoff beim Einschrauben der Schraube 6.

Das erste Markiermittel 7E ist vorzugsweise durch eine Markierung, eine Schulter o. dgl., gebildet.

Das zweite Markiermittel 7F ist vorzugsweise durch eine Markierung, eine Schulter, einen Anschlag o. dgl., gebildet, wie in Fig. 2 angedeutet.

Die beiden Markiermittel 7E und 7F sind vorzugsweise axial verstellbar, insbesondere zur Anpassung an verschiedene Dämmplattendicken, Dübellängen und/oder Schraubenlängen. Die axiale Verstellbarkeit kann insbesondere dadurch erreicht werden, dass das erste und/oder zweite Markiermittel 7E, 7F zusammen mit dem zweiten Führungsabschnitt 7D verstellbar oder von diesem gebildet ist bzw. sind. Jedoch können die Markiermittel 7E, 7F auch separat davon gebildet und/oder verstellbar sein.

Fig. 2 zeigt in einem zu Fig. 1 korrespondierenden, schematischen Schnitt einen Zustand, bei dem der Dübel 5 zusammen mit der vorzugsweise teilweise in den Dübel 5 bereits eingeschraubten Schraube 6 soweit eingeführt bzw. eingeschoben ist, beispielsweise mittels des Werkzeugs 7, das das in Einfuhrungsrichtung vordere Ende des Dübels 5 bereits in der Nähe des Befestigungselements 3 bzw. Vorsprungs 3C bzw. der Einführschräge 3D liegt. Der Dübel 5 und die Schraube 6 liegen jedoch noch innen auf der Durchbrechung 2D der Dämmplatte 2 auf, sind also noch nicht zentrisch geführt bzw. ausgerichtet. Vielmehr ist hier die Schraube 6 bzw. deren Kopf 6A und insbesondere auch der Dübel 5 noch radial bzw. quer zu den Werkzeugkopf 7A versetzt.

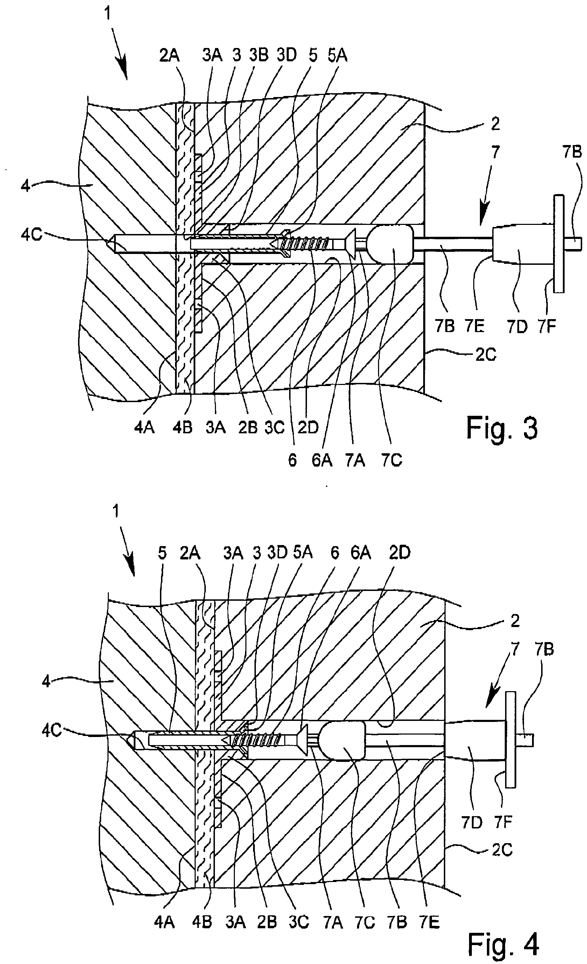

Fig. 3 zeigt einen Zustand, bei dem der Dübel 5 bereits so weit eingeführt bzw. eingeschoben ist, insbesondere mittels des Werkzeugs 7, dass das in Einführungsrichtung vordere Ende des Dübels 5 bereits das Befestigungselement 3 bzw. den Anfang der Durchbrechung 3B des Befestigungselements 3 bzw. die Einführschräge 3D erreicht. Während des Einführens und bis zum Erreichen diesen Zustands wird der Dübel 5 bzw. dessen Spreizelement, hier die Schraube 6, und/oder ein sonstiges Verbindungsmittel oder -element von der Durchbrechung 2D bzw. von der Dämmplatte 2 bzw. von dem Dämmstoff der Dämmplatte 2 seitlich geführt. Die Einführschräge 3D und sich anschließende Durchbrechung 3B dienen dann insbesondere einer (weiteren) Zentrierung oder axialen Positionierung bzw. Führung des Dübels 5 und damit auch der Schraube 6. Dementsprechend ist in der Darstellung gemäß Fig. 3 die Schraube 6 mit ihrem Kopf 6A bereits koaxial in dem vorzugsweise zentrisch geführten Werkzeugkopf 7A ausgerichtet.

Fig. 4 zeigt in einem zu Fig. 1 bis 3 korrespondierenden, schematischen Schnitt das Befestigen der Dämmplatte 2 bzw. des Befestigungselements 3 an dem Bauwerk 4, wobei der Dübel 5 nun vollständig eingeführt ist, wobei der Dübel 5 mit seinem Dübelkopf 5A an der Einführschräge 3D zur Anlage kommt. Dieser vollständig eingeführte Zustand wird einem nicht dargestellten Benutzer vorzugsweise durch das erste Markiermittel 7E angezeigt, beim Darstellungsbeispiel insbesondere dadurch, dass das Markiermnittel 7E in der Ebene der Außenseite 2C der Dämmplatte 2 liegt, wie in Fig. 4 angedeutet. Jedoch sind auch andere Kennzeichnungen möglich. Beispielsweise kann auch ein separates Werkzeug nur zum korrekten Einführen des Dübels 5 eingesetzt werden. In diesem Fall kann das separate Werkzeug einen Anschlag als erstes Markiermittel 7E aufweisen, so dass nur ein Einführen bis zu einer bestimmten Tiefe möglich ist. Der Anschlag kann dann beispielsweise im korrekt oder vollständig eingeführten Zustand auf der Außenseite 2C der Dämmplatte 2 zur Anlage kommen.

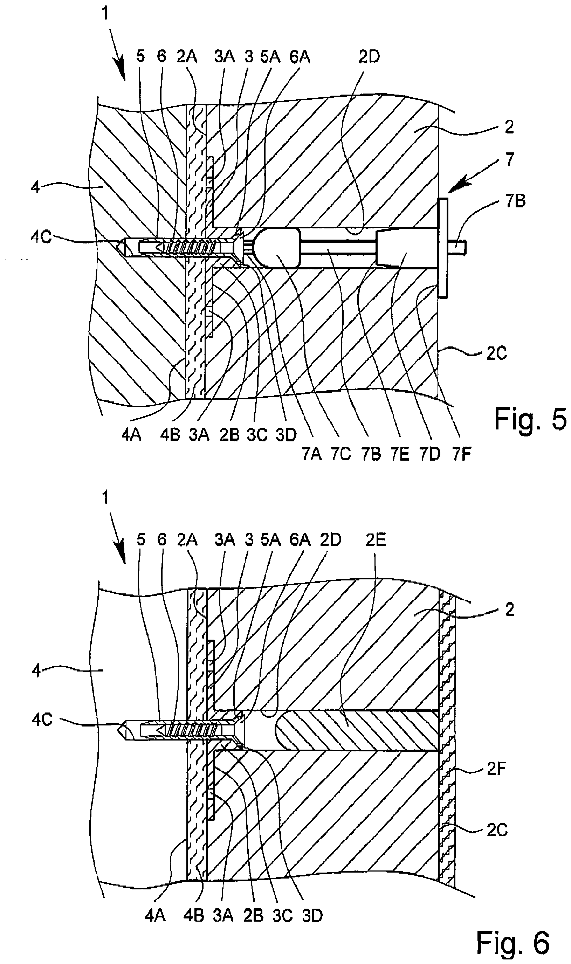

Nach dem (vollständigen) Einführen bzw. Einstecken des Dübels 5 erfolgt das Spreizen des Dübels 5 im Bauwerk 4 bzw. Bohrloch 4C. Dies erfolgt mit Hilfe des Spreizelements, hier insbesondere durch Einschrauben der Schraube 6. Im gespreizten Zustand ist die Dübelverbindung hergestellt. Dieser Zustand ist in Fig. 5 in einem zu den Fig. 1 bis 4 korrespondierenden Schnitt schematisch dargestellt. Hier ist die Schraube 6 also vollständig in den Dübel 5 eingeschraubt. Das Einschrauben ist insbesondere mittels des Werkzeugs 7 erfolgt. Dieser eingeschraubte Zustand wird vorzugsweise durch das zweite Markiermittel 7F angezeigt, hier insbesondere dadurch, dass eine Schulter oder ein Anschlag in der Ebene der Außenseite 2C liegt oder auf dieser zur Anlage kommt.

Im eingeschraubten Zustand kommt die Schraube 6 mit ihrem Schraubenkopf 6A vorzugsweise am Dübelkopf 5A und/oder am Befestigungselement 3 bzw. Vorsprung 3C bzw. deren Einführschräge 3D zur Anlage.

An Stelle der Schraube 6 kann jedoch auch ein sonstiges Spreizmittel, beispielsweise ein einzuschlagender Bolzen zum Spreizen des Dübels 5 0. dgl. verwendet werden,

Gemäß einer nicht dargestellten Ausführungsalternative kann das Verbinden des Befestigungselements 3 mit dem Bauwerk 4 beispielsweise auch durch eine Klebeverbindung, einen Klebedübel, einen Klebeanker o. dgl., erfolgen. In diesem Fall wird dann ein entsprechender Klebedübel, Klebeanker o. dgl. eingeführt und beispielsweise mit dem Bauwerk 4, insbesondere in der Bohrung 4C, verklebt oder auf sonstige Weise damit verbunden oder darin verankert.

In den vorgenannten Fällen erfolgt ein direktes Verbinden des Befestigungselements 3 mit dem Bauwerk 4. Das Befestigungselement 3 ist seinerseits mit der Dämmplatte 2 verbunden, insbesondere durch die bereits oben erläuterte Vormontage. Dementsprechend ist dann die Dämmplatte 2 über das Befestigungselement 3 mit dem Bauwerk 4 fest verbunden und wird dadurch ausreichend sicher am Bauwerk 4 bzw. vom Bauwerk 4 gehalten.

Nach dem Befestigen des Befestigungselements 3 am Bauwerk 4, insbesondere nach dem Herstellen der Dübelverbindung bzw. dem vollständigen Einschrauben der Schraube 6, wird das Werkzeug 7 entfernt und die Durchbrechung 2D in der Dämmplatte 2 verschlossen. Dieses Verschließen erfolgt vorzugsweise durch einen Stopfen 2E, wie in Fig. 6 angedeutet. Der Stopfen 2E wird vorzugsweise klemmend in die Dämmplatte 2 bzw. deren Durchbrechung 2D eingesteckt. Vorzugsweise besteht der Stopfen 2E aus dem gleichen Dämmstoff wie die Dämmplatte 2 oder einen ähnlichen Dämmstoff. Ggf. kann der Stopfen 2E auch aus einem Dämmmaterial mit besserer Wärmeisolierung als die Dämmplatte 2 bestehen, da die Länge des Stopfens 2E geringer als die Dicke der Dämmplatte 2 ist.

Durch das Verschließen der Durchbrechung 2D mit einem dämmenden, insbesondere wärmeisolierenden Stopfen 2E kann die Bildung einer Wärmebrücke im Bereich der Durchbrechung 2D vermieden oder zumindest verringert werden.

Der bevorzugte Einsatz eines gleichen oder ähnlichen Dämmstoffs für den Stopfen 2E wie für die Dämmplatte 2 hat den Vorteil, dass kein Einbringen unterschiedlicher Materialien in die Dämmplatte 2 erfolgt. Dies ist insbesondere hinsichtlich einer außenseitigen Abdeckung bzw. einem außenseitigen Verputzen des Systems 1 bzw. der Dämmplatte 2 vorteilhaft, da so sich sonst oftmals im Bereich von Durchbrechungen oder Befestigungselementen ergebende Abzeichnungen vermieden werden können. Des Weiteren ist der Einsatz dieses Materials dahingehend von Vorteil, dass nur sortenreines Material in der Dämmplatte 2 vorhanden ist, wenn die Dämmplatte 2 später einmal entsorgt werden muss (die Befestigungselemente 3 befinden sich nur an einer Flachseite bzw. der Bauwerksseite 2A, daher kann die Dämmplatte 2 von den Befestigungselementen 3 entfernt werden).

In Fig. 6 ist schematisch angedeutet, dass das vorschlagsgemäße System 1 bzw. die befestigte Dämmplatte 2 außenseitig vorzugsweise abgedeckt wird, insbesondere durch einen Putz 2F. Bei diesem Putz 2F handelt es sich insbesondere um ein Material oder einen Aufbau auf Mineralhasis, Kunststoffbasis o. dgl., das bzw. der vorzugsweise durch ein Gewebe verstärkt ist. Der Putz 2F ist vorzugsweise sehr dünn ausgeführt und bildet insbesondere eine gegenüber dem Dämmstoff bzw. der Dämmplatte 2 relativ harte Oberfläche und/oder schützt die Dämmplatte 2 vor Umwelteinflüssen, wie Schlagregen, Druckbeanspruchung, Sonneneinstrahlung o. dgl.

Fig. 7 zeigt die Dämmplatte 2 im vormontierten Zustand bzw. die vormontierte Baueinheit 1A von der Bauwerkseite 2A her in einer schematischen Draufsicht, wie bereits erwähnt. Die Befestigungselemente 3 sind vorzugsweise im Bereich der Ecken der Dämmplatte 2 und/oder in der Mitte der Dämmplatte 2 angeordnet. Weiter ist aus Fig. 7 die bevorzugte tellerartige Ausbildung der Befestigungselemente 3 ersichtlich.

Fig. 8 zeigt die vormontierte Dämmplatte 2 bzw. vormontierte Baueinheit 1A in einer Draufsicht von der Außenseite 2C her.

Die vorschlagsgemäße Lösung führt zu vielen verschiedenen Vorteilen:
Das Befestigungselement 3 sitzt zumindest im Wesentlichen nur an der Unterseite bzw. Bauwerkseite 2A der Dämmplatte 2.

Die Herstellung der Durchbrechungen 2D und/oder 3B, also von Montageöffnungen, kann bereits werksseitig bzw. fabrikseitig erfolgen. Dies verringert den Arbeitsaufwand vor Ort.

Die Durchbrechungen 2D der Dämmplatte 2 können optimal und gut gedämmt verschlossen werden. Störstellen in der Dämmplatte 2 können vermieden werden. Insbesondere wird keine Wärmebrücke gebildet. Es erfolgt keine Behinderung von Diffusionsvorgängen. Weiter können optimale Schalldämmeigenschaften erreicht werden.

Ein weiterer Vorteil liegt darin, dass die Recyclingfähigkeit sehr hoch ist, da keine "Verunreinigungen" der Dämmplatten 2 durch Einbringen von Fremdstoffen in die Dämmplatten 2 erfolgt.

Zwängungsspannungen in den Dämmplatten 2 werden vermieden, da Verformungen der Dämmplatten 2 nicht behindert werden.

Es kann eine optimale Klebeverbindung zwischen den Dämmplatten 2 und den Befestigungselementen 3 durch die insbesondere werksseitige Verbindung bzw. Vormontage erreicht und sichergestellt werden. Insbesondere ist auch eine industrielle Qualitätskontrolle möglich.

Bei der vorschlagsgemäßen Lösung können kurze kostengünstige und insbesondere auch handelsübliche Dübel 5 bzw. Dübelsysteme und/oder Schrauben 6 eingesetzt werden.

Weiter können die handelsüblichen Dübel auch bei verschiedenen Dämmplattendicken eingesetzt werden, da die Dübellänge davon unabhängig ist.

Die vorschlagsgemäß einsetzbaren Dübel 5 erlauben Logistikvorteile, insbesondere ein geringes Transportvolumen und/oder geringere Bevorratungsbestände, da Standarddübel eingesetzt werden können. Weiter müssen an der Baustelle nur geringe Volumen an Dübeln 5 gehandhabt werden.

Die vorschlagsgemäße Lösung verhindert eine Beschädigung der Dämmplatten 2 bzw. der Außenseite 2C bei der Montage am Bauwerk 4. Insbesondere kann ein sonst übliches Nacharbeiten oder Nachspachteln entfallen. Weiter kann ein ansonsten oftmals auftretender "Frässtaub" oder ein Austritt von Bohrmehl o. dgl. beim Bohren vermieden werden, insbesondere bei werksseitiger Ausbildung der Durchbrechungen 2D. In diesem Zusammenhang ist darauf hinzuweisen, dass der relativ große Durchmesser der Durchbrechungen 2D in den Dämmplatten 2 die Aufnahme von Bohrmehl gestattet, so dass unerwünschte Verunreinigungen und ein Austreten von Staub o. dgl. vermieden werden können.

Da die Oberfläche bzw. Außenseite 2C der Dämmplatten 2 nicht beschädigt werden und insbesondere ein sehr glattes Verschließen der Durchbrechungen 2D mit gleichem oder ähnlichem Dämmmaterial durch die Stopfen 2E ermöglicht wird, werden unterwünschte Erhebungen, unerwünschte Materialwechsel und dgl. vermieden, wodurch ein unerwünschtes Abzeichnen von Erhebungen, Vertiefungen o. dgl. auf der fertigen Außenseite, insbesondere auch im Putz 2F nach endgültiger Fertigstellung vermieden werden.

Ein weiterer Vorteil der vorliegenden Erfindung liegt darin, dass der bisher übliche Ablauf bei der Befestigung der Dämmplatten 2 am Bauwerk 4 erhalten werden kann.

Es wird eine sehr einfache, robuste Montage bzw. Befestigung, insbesondere ohne ein besonders aufwendiges Setzwerkzeug oder Fräswerkzeug, ermöglicht.

Die Dämmplatte 2 kann wie bisher am Bauwerk 4 angeklebt werden.

Die mit den Durchbrechungen 2D versehenen Dämmplatten 2 geben bereits ein optimales Dübelraster vor, so dass ein ansonsten oft erforderliches Anzeichen von Befestigungspositionen o. dgl. nicht erforderlich ist.

Die Gestaltung der Befestigungselemente 3 kann auf gewünschte Traglasten und gewünschte Fixierungsbereiche bzw. Verbindungsbereiche abgestimmt werden. Des Weiteren kann die Lage der Befestigungselemente 3 an der Dämmplatte 2 in optimaler Weise auf eine gewünschte Anordnung, beispielsweise zur Fixierung des Rands der Dämmplatte 2, angepasst werden.

Es sind sehr hohe Traglasten bei geringen Dübelmengen pro Quadratmeter erreichbar.

Die werksseitige Ausbildung der Durchbrechungen 2D führt zu sehr sauberen, definierten Montageöffnungen in der Dämmplatte 2 und erleichtert auch die Handhabung bei der Befestigung am Bauwerk 4. Alternativ oder zusätzlich wird hierdurch auch ein perfekter Sitz der Stopfen 2E ermöglicht oder unterstützt.

Vorzugsweise werden die Verbindungselemente, wie die Dübel 5 und/oder Schrauben 6, von der Außenseite 2C der Dämmplatten 2 aus zugeführt bzw. eingebracht im Gegensatz zu den Befestigungselementen 3, die von der Rückseite bzw. Bauwerkseite 2A her angebracht werden.

Die Befestigungselemente 3 sind vorzugsweise aus Polyamid, einem glasfaserverstärktem Polyamid o. dgl. hergestellt. Die Befestigungselemente 3 sind vorzugsweise klebfähig und/oder mit unterschiedlichen Oberflächenrauhigkeiten bzw. mit einer für das Ankleben optimierten Oberfläche oder Oberflächenrauhigkeit versehen.

Es ist möglich, dass die Befestigungselemente 3 mit einer bestimmten Vorspannung werksseitig fixiert werden, insbesondere um Klebstoff beim Ankleben an die Dämmplatten 2 aushärten zu lassen. Hierzu kann eine mechanische Zusatzfixierung eingesetzt werden, beispielsweise eine Spirale 8 (beispielhaft in Fig. 1 gezeigt), Nägel, Klammern, o. dgl.

Durch das besonders bevorzugte Versenken der Befestigungselemente 3 in die Bauwerkseite 2A bzw. durch das Einsetzen der Befestigungselemente 3 in entsprechende Vertiefungen oder Aussparungen 2B der Dämmplatte 2 wird bevorzugt eine glatte Bauwerkseite 2A der vormontierten Dämmplatten 2 bzw. Baueinheiten 1A erreicht. Dies ist insbesondere im Hinblick auf eine gute Stapelfähigkeit und/oder im Hinblick auf ein glattes bzw. gleichmäßiges Ankleben am Bauwerk 4 von Vorteil.

Die vorzugsweise vorgesehenen Vertiefungen bzw. Aussparungen 2B dienen insbesondere dazu, um das jeweilige Befestigungselement 3 lageorientiert und/oder zentrisch, insbesondere relativ zu der zugeordneten Durchbrechung 2D in der Dämmplatte 2 aufnehmen zu können. Die Vertiefungen bzw. Aussparungen 2B können dementsprechend auch Positioniermittel im Sinne der Vorsprünge 3C darstellen oder bilden.

Es ist anzumerken, dass die Bohrlochherstellung und das Dübelsetzen ggf. auch gleichzeitig, insbesondere mit einem entsprechenden Spezialwerkzeug, erfolgen kann.

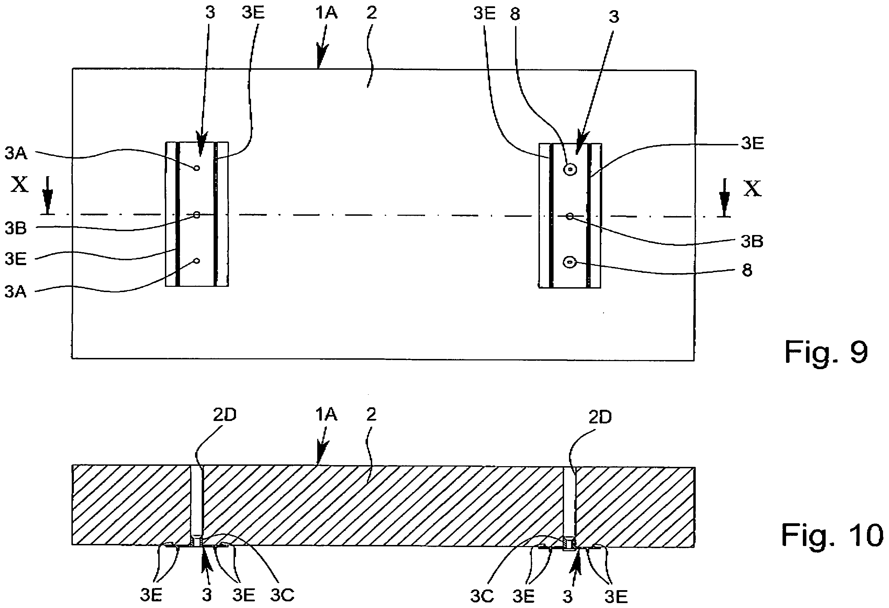

Nachfolgend wird anhand von Fig. 9 und 10 eine weitere Ausführungsform des vorschlagsgemäßen Befestigungselements 3 bzw. der vormontierten Baueinheit 1A näher erläutert, wobei lediglich auf wesentliche Unterschiede gegenüber der bisherigen Ausführungsform bzw. wesentliche neue Aspekte dieser weiteren Ausführungsform näher eingegangen wird. Die bisherigen Ausführungen und Erläuterungen gelten daher insbesondere entsprechend oder ergänzend, auch wenn die diesbezügliche Beschreibung nicht wiederholt wird.

Fig. 9 zeigt die vorschlagsgemäße Baueinheit 1A bestehend aus einer Dämmplatte 2 und einer oder mehreren zugeordneten Befestigungselementen 3 in einer Draufsicht von der Bauwerkseite. Fig. 10 zeigt einen schematischen Schnitt entlang der Linie X-X von Fig. 9.

Gemäß der weiteren Ausführungsform ist das Befestigungselement 3 vorzugsweise länglich, insbesondere zumindest im Wesentlichen rechteckig oder als schmaler Streifen ausgebildet. Das Befestigungselement 3 weist vorzugsweise einen insbesondere länglichen und/oder im Wesentlichen rechteckigen Plattenabschnitt auf, der bedarfsweise auch mit Durchbrechungen 3B versehen sein kann.

Das Befestigungselement 3 bzw. dessen Plattenabschnitt weist vorzugsweise mindestens ein Verstärkungselement 3E auf. Das Verstärkungselement 3E dient insbesondere einer Versteifung des Plattenabschnitts des Befestigungselements 3.

Das Verstärkungselement 3E erstreckt sich vorzugsweise zumindest im Wesentlichen in der Längserstreckung des Befestigungselements 3 bzw. Plattenabschnitts.

Das Verstärkungselement 3E ist vorzugsweise rippenartig oder stegartig oder schenkelartig ausgebildet.

Das Verstärkungselement 3E ragt vorzugsweise von dem Befestigungselement 3 bzw. dessen Plattenabschnitt ab oder vor und/oder schließt vorzugsweise mit dem Plattenabschnitt oder einer Hauptebene des Befestigungselements 3 einen Winkel ein. So kann eine wirksame Versteigung quer zur Platten- oder Hauptebene des Befestigungselements 3 erreicht werden.

Das Verstärkungselement 3E kann je nach Bedarf auf der Bauwerkseite und/oder auf der Dämmplattenseite des Befestigungselements 3 angeordnet oder gebildet sein.

Vorzugsweise ist das Verstärkungselement 3E einstückig an das Befestigungselement 3 angeformt bzw. einstückig mit diesem ausgebildet.

Bedarfsweise können auch mehrere Verstärkungselemente 3E an einem Befestigungselement 3 vorgesehen sein, wahlweise auf einer Seite des Befestigungselements 3 oder auf beiden Seiten des Befestigungselements 3.

Beim Darstellungsbeispiel weisen die Befestigungselemente 3 gemäß der weiteren Ausführungsform vorzugsweise jeweils zwei Verstärkungselemente 3E jeweils sowohl auf der Bauwerkseite als auch auf der Dämmplattenseite auf.

In der Draufsicht gemäß Fig. 9 ist beispielhaft bei dem rechten Befestigungselement 3 angedeutet, dass dieses mittels einer oder mehrerer, hier zweier formschlüssiger Verbindungen bzw. Spiralen 8 o. dgl. (zusätzlich) mit der zugeordneten Dämmplatte 2 verbunden sein kann (wie in Fig. 1 angedeutet).

Beim Darstellungsbeispiel gestattet die vorzugsweise längliche oder riegelartige Ausbildung des Befestigungselements 3, insbesondere in Kombination mit den Verstärkungselementen 3E, eine relativ großflächige Kraftübertragung und/oder plattenmäßige Versteifung, so das relativ wenige Befestigungselemente 3, hier beispielsweise nur zwei Befestigungselemente 3, zur Befestigung einer üblichen Dämmplatte 2 von beispielsweise 50 x 100 cm genügen und/oder wobei auch bei sehr großflächiger Ausbildung der Befestigungselemente 3 und/oder verhältnismäßig großer Länge der Befestigungselemente 3 bedarfsweise auch nur eine Dübelverbindung pro Befestigungselement 3 genügt bzw. ausreichen kann. Dementsprechend ist der Aufwand für Material und Montage verhältnismäßig gering.

Fig. 10 ist zu entnehmen, dass sich die Vorsprünge 3C der Befestigungselemente 3 wieder in entsprechende Durchbrechungen 2D der Dämmplatte 2 erstrecken.

Es ist anzumerken, dass die Dämmplatte 2 keine Vertiefung oder Aussparung 2B zur Aufnahme des jeweiligen Befestigungselements 3 bzw. Plattenabschnitts des Befestigungselements 3 aufweisen muss. Vielmehr kann das Befestigungselement 3 mit seinem Plattenabschnitt auch auf der bauwerksseitigen Flachseite der Dämmplatte 2 angeordnet, insbesondere angeklebt, sein. Die dämmplattenseitigen Verstärkungselemente 3E können sich vorzugsweise in den relativ weichen Dämmstoff eindrücken und hierdurch eine Positionierung des jeweiligen Befestigungselements 3 und/oder ein Verbinden des jeweiligen Befestigungselements 3 unterstützen, beispielsweise durch temporäres Fixieren für das Ankleben an der Dämmplatte 2.

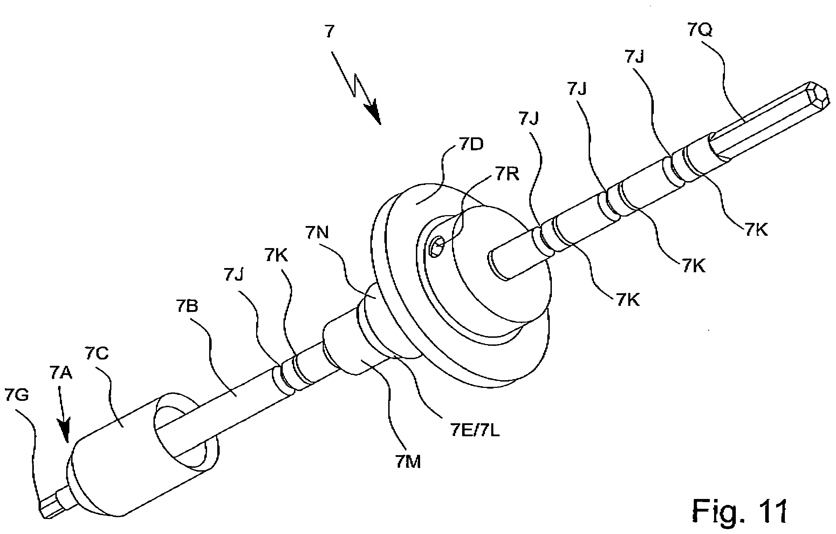

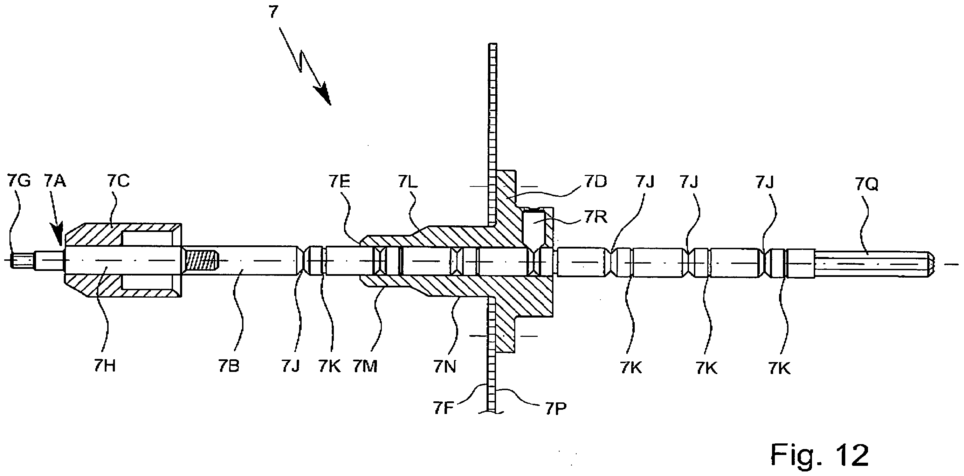

Fig. 11 und 12 zeigen das Werkzeug 7 gemäß einer anderen bzw. detaillierteren Ausführungsform. Fig. 11 zeigt das Werkzeug 7 in einer perspektivischen Ansicht. Fig. 12 zeigt das Werkzeug 7 in einem schematischen Längsschnitt. Nachfolgend werden im Wesentlichen nur Unterschiede oder weitere Aspekte des Werkzeugs 7 näher erläutert, so dass die bisherigen Ausführungen und Erläuterungen insbesondere entsprechend oder ergänzend gelten.

Der Schaft 7B ist beim Darstellungsbeispiel vorzugsweise zumindest im Wesentlichen stangenförmig oder bolzenförmig und/oder zumindest im Wesentlichen zylindrisch ausgebildet.

Der Schaft 7B ist am vorderen bzw. werkzeugkopfseitigen Ende vorzugsweise mit einem Verbindungsmittel, wie einem Innen- oder Außengewinde o. dgl., zur lösbaren Halterung des Werkzeugkopfs 7A versehen.

Das Werkzeug 7 bzw. der Werkzeugkopf 7A weist vorzugsweise ein vorderes (dämmplattenseitiges) Ende 7G mit einem Mitnahmeprofil oder Angriffsabschnitt zur insbesondere drehfesten Kopplung mit einer Schraube 6 bzw. einem Schraubenkopf 6A auf. Als Mitnahmeprofil kann insbesondere ein Vielrund, Mehrkant, Innenmehrkant oder Außenmehrkant, Kreuzkopf, Flachkopf o. dgl. vorgesehen sein.

Alternativ oder zusätzlich ist das Ende 7G bzw. der Angriffsabschnitt vorzugsweise dazu ausgebildet, ein Verbindungselement, wie den Dübel 5 und/oder die Schraube 6, in das Befestigungselement 3 bzw. Bauwerk 4 bzw. die Bohrung 4C einzutreiben, insbesondere vor einem weiteren Einführen, beispielsweise durch Einschlagen oder Einschrauben eines Spreizelements, wie der Schraube 6 o. dgl.

Der Werkzeugkopf 7A bzw. das Ende 7G ist vorzugsweise derart ausgebildet, dass er bzw. es zusammen mit dem zugeordneten Verbindungselement bzw., wie der Schraube 6 bzw. deren Schraubenkopf 6A, vorzugsweise durch axiales Aufeinanderzubewegen eine radiale Zentrierung und/oder einen drehfesten Eingriff bewirkt oder unterstützt, insbesondere durch entsprechende konische Ausbildung, konische oder geneigte Angriffsflächen o. dgl.

Der Werkzeugkopf 7A oder das Ende 7G ist vorzugsweise wechselbar, insbesondere rastend oder gewindemäßig mit dem Werkzeug 7 bzw. Schaft 7B verbindbar. Insbesondere kann es sich bei dem Ende 7G bzw. Werkzeugkopf 7A um ein sogenanntes Schraubbit oder stückbares Bit handeln.

Beim Darstellungsbeispiel weist der Werkzeugkopf 7A vorzugsweise einen Verbindungsabschnitt 7H auf, der mit einem Halteabschnitt, insbesondere einem Innengewinde oder Außengewinde des Werkzeugs 7 bzw. Schafts 7B lösbar verbindbar ist. Jedoch sind auch andere konstruktive Lösungen möglich.

Der erste Führungsabschnitt 7C dient vorzugsweise einer seitlichen Führung des Werkzeugs 7 bzw. Werkzeugkopfs 7A oder dessen Ende 7G in der Dämmplatte 2 bzw. Bohrung oder Durchbrechung 2D. Der erste Führungsabschnitt 7C weist vorzugsweise einen an die Bohrung bzw. Durchbrechung 2D angepassten Durchmesser auf, insbesondere so dass der Werkzeugkopf 7A in der Bohrung bzw. Durchbrechung 2D mit insbesondere allenfalls geringem Spiel oder quasi ohne Spiel seitlich bzw. zentrisch geführt wird. Gegebenenfalls kann der erste Führungsabschnitt 7C auch ein gewisses Übermaß aufweisen.

Der Durchmesser des ersten Führungsabschnitts 7C ist vorzugsweise größer als der Werkzeugkopf 7A und/oder Schaft 7B, insbesondere mindestens um 50 % größer, vorzugsweise zumindest im Wesentlichen etwa doppelt oder dreifach so groß.

Der erste Führungsabschnitt 7C ist vorzugsweise zumindest im Wesentlichen zylindrisch ausgebildet und/oder mit einer insbesondere konischen Schräge am vorderen axialen Ende zum Erleichtern des Einführens in die Bohrung bzw. Durchbrechung 2D versehen.

Der erste Führungsabschnitt 7C ist vorzugsweise wechselbar, insbesondere zusammen mit dem Werkzeugkopf 7A.

Besonders bevorzugt ist der erste Führungsabschnitt 7C unlösbar oder fest mit dem Werkzeugkopf 7A, dem Ende 7G bzw. Verbindungsabschnitt 7H verbunden.

Besonders bevorzugt ist der erste Führungsabschnitt 7C auf den Werkzeugkopf 7A bzw. dem Verbindungsabschnitt 7H aufgesteckt oder aufgeklemmt.

Bedarfsweise kann der erste Führungsabschnitt 7C auch als Handhabe zum Wechseln des Werkzeugkopfs 7A bzw. des Endes 7G ausgebildet sein oder eingesetzt werden, beispielsweise um den Werkzeugkopf 7A vom Schaft 7B abzuschrauben oder an diesen anzuschrauben.

Der erste Führungsabschnitt 7C ist vorzugsweise aus Kunststoff hergestellt.

Der zweite Führungsabschnitt 7D ist vorzugsweise beabstandet zum ersten Führungsabschnitt 7C am Schaft 7B angeordnet bzw. von diesem gehalten.

Der zweite Führungsabschnitt 7D ist vorzugsweise axial verstellbar bzw. in unterschiedlichen axialen Lagen am Schaft 7B festlegbar. Beim Darstellungsbeispiel wird dies vorzugsweise durch entsprechende Eingriffsmöglichkeiten, wie Vertiefungen oder Rillen 7J, insbesondere Umfangsrillen, am Schaft 7B und einem verstellbaren Eingriffselement, wie einem Gewindestift 7R am zweiten Führungsabschnitt 7D realisiert. Der Gewindestift 7R ist vorzugsweise am zweiten Führungsabschnitt 7D gewindemäßig radial verstellbar geführt und kann mit einer vorzugsweise konischen Spitze in eine zugeordnete Vertiefung, Rille 7J o. dgl. am Schaft 7B zur Festlegung einer gewünschten axialen Lage des zweiten Führungsabschnitts 7D eingreifen.

Die Eingriffsmöglichkeiten bzw. Verstellmöglichkeiten, hier die Rillen 7J, sind vorzugsweise mit entsprechenden Markierungen 7K oder Bezeichnungen, insbesondere zur Kennzeichnung der zugeordneten Dämmplattendicke, beispielsweise in Millimetern, versehen. Diese Bezeichnungen bzw. Markierungen 7K sind beim Darstellungsbeispiel an dem Schaft 7B angebracht bzw. gebildet.

Jedoch sind auch andere konstruktive Lösungen zur axialen Verstellbarkeit und Festlegung des zweiten Führungsabschnitts 7D am Werkzeug 7 bzw. Schaft 7B möglich.

Eine vordere Kante des zweiten Führungsabschnitts 7D bildet vorzugsweise das erste Markiermittel 7E, insbesondere um einem Benutzer ein ausreichendes Einführen oder Einschlagen eines Dübels 5, insbesondere mit vormontierter Schraube 6, in die zugeordnete Bohrung 4C bzw. das Befestigungselement 3 anzuzeigen.

Der zweite Führungsabschnitt 7D weist vorzugsweise einen konischen oder angeschrägten Abschnitt 7L auf, der sich insbesondere zur Dämmplatte 2 bzw. dem Werkzeugkopf 7A bzw. dem Ende 7G hin verjüngt. Der Abschnitt 7L bildet vorzugsweise einen Übergang zwischen einem ersten Bereich 7M geringeren Durchmessers und einem zweiten Bereich 7N größeren Durchmessers des zweiten Führungsabschnitts 7D.

Der erste Bereich 7M dient vorzugsweise einer ersten seitlichen Führung des Werkzeugs 7 bei einem einfachen Einführen des zweiten Führungsabschnitts 7D in die Dämmplatte 2 bzw. deren Bohrung 2D bzw. beim (vollständigen) Einführen bzw. Einschlagen des Dübels 5 in das Befestigungselement 3 und das sich anschließende Bauwerk 4.

Der zweite Bereich 7N dient vorzugsweise einem seitlichen Führen des Werkzeugs 7 beim Eintreiben bzw. Einschrauben der Schraube 6 oder eines sonstigen Spreizelements in den Dübel 5.

Das Werkzeug 7 bzw. der zweite Führungsabschnitt 7C weist vorzugsweise einen Anschlag oder Anschlagteller 7P zur Anlage auf einer Flachseite oder Außenseite 2C der Dämmplatten 2 bei vollständig oder ausreichend eingeführter Schraube 6 bzw. erfolgter Verdübelung auf. Der Anschlag bildet vorzugsweise das zweite Markiermittel 7F, um einem Benutzer das vollständige Einführen oder Einschrauben der Schraube 6 oder eines sonstigen Spreizelements in den zugeordneten Dübel 5 anzuzeigen.

Beim Darstellungsbeispiel ist der vorgenannte Anschlag vorzugsweise durch den zweiten Führungsabschnitt 7D, insbesondere einen entsprechenden Flanschabschnitt des zweiten Führungsabschnitt 7D, oder einen daran angeordneten bzw. davon gehaltenen Anschlagteller 7P gebildet. Vorzugsweise ist der Anschlagteller 7P mit dem zweiten Führungsabschnitt 7D verschraubt.

Der Durchmesser des Anschlags bzw. Anschlagtellers 7P beträgt vorzugsweise mehr als 5 cm, insbesondere mehr als 8 cm, besonders bevorzugt mehr als 10 cm, beim Darstellungsbeispiel etwa 12 cm. Aufgrund der großen Fläche des Anschlags bzw. Anschlagtellers 7P kann ein unerwünschtes Eindrücken in die Außenseite 2C der Dämmplatten 2 bei Erreichen der Endlage des Werkzeugs 7 verhindert werden.

Das Werkzeug 7 bzw. der Schaft 7B weist an seinem rückwärtigen, also dem Werkzeugkopf 7A abgewandten Ende vorzugsweise einen insbesondere als Mehrkant ausgeführten Endabschnitt 7Q zum Einspannen bzw. drehfesten Verbinden mit einem nicht dargestellten Antrieb (z. B. Bohrmaschine, Akkuschrauber o. dgl.) auf.

Alternativ oder zusätzlich kann der Endabschnitt 7Q auch ein Schlagende zum Einwirken eines Schlagelements, wie eines Hammers o. dgl., bilden, um das Werkzeug 7 und damit das zugeordnete Verbindungselement oder Spreizelement, wie den Dübel 5 und/oder die Schraube 6, in das Befestigungselement 3 und das zugeordnete Bauwerk 4 einzuführen bzw. einzutreiben oder einzuschlagen. In diesem Fall kann der Endabschnitt 7Q auch als entsprechend verbreiteter Kopf ausgebildet sein.

Das vorschlagsgemäße Werkzeug 7 wird vorzugsweise zur Befestigung von Dämmplatten 2 mit bauwerksseitigen oder bauwerksnahen Befestigungselementen 3 an dem Bauwerk 4 eingesetzt. Das Werkzeug 7 bzw. dessen Werkzeugkopf 7A wird dabei in einer entsprechenden Bohrung oder Durchbrechung 2D von dem Dämmstoff der jeweiligen Dämmplatte 2 zur Verbindung, insbesondere Verdübelung, des der Bohrung bzw. Durchbrechung 2D zugeordneten Befestigungselements 3 mit dem Bauwerk 4 seitlich bzw. mittig geführt. Dies ermöglicht eine sehr einfache und intuitive Handhabung und eine sehr schnelle Montage.

Bezüglich des bevorzugten Montageablaufs wird grundsätzlich auf die obige Beschreibung verwiesen. Ergänzend ist anzumerken, dass ein Einführen oder Eintreiben des Dübels 5 in das Befestigungselement 3 und in das Bauwerk 4 auch mit dem bereits in eine Bohrmaschine, einen Schrauber o. dgl. eingespannten Werkzeug 7 erfolgen kann. Alternativ oder, soweit erforderlich, kann das Werkzeug 7, insbesondere im nicht eingespannten Zustand, auch zum (vollständigen) Einschlagen des Dübels 5 eingesetzt werden.

Generell hängt die Kraft zum Einführen des Dübels 5 insbesondere von einer entsprechenden Anpassung des Durchmessers der Durchbrechung 3B des Befestigungselements 3 und des Durchmessers der Bohrung 4C im Bauwerk 4 an den Durchmesser des Dübels 5 vor dem (vollständigen) Aufspreizen bzw. Einschrauben der Schraube 6 ab.

Ergänzend ist anzumerken, dass das erste Markiermittel 7E zur Anzeige eines vollständigen Einführens des Dübels 5 nur optional ist. Beispielsweise kann das vollständige Einführen des Dübels 5 auch dadurch einem Benutzer angezeigt werden, dass ein weiteres Einführen des Werkzeugs 7 nicht möglich ist bzw. der Widerstand entsprechend ansteigt. Dies spürt der Benutzer, wenn der Dübelkopf 5A am Befestigungselement 3 bzw. an der Einführschräge 3D anliegt und nicht weiter eingeführt werden kann.

**Bezugszeichenliste:**

| | | | |
|---|---|---|---|
| 1 | System | 7 | Werkzeug |
| | 1A Baueinheit | | 7A Werkzeugkopf |
| 2 | Dämmplatte | | 7B Schaft |
| | 2A Bauwerkseite | | 7C erster Führungsabschnitt |
| | 2B Aussparung | | 7D zweiter Führungsabschnitt |
| | 2C Außenseite | | 7E erstes Markiermittel |
| | 2D Durchbrechung | | 7F zweites Markiermittel |
| | 2E Stopfen | | 7G Ende |
| | 2F Putz | | 7H Verbindungsabschnitt |
| 3 | Befestigungselement | | 7J Rille |
| | 3A Ausnehmung | | 7K Markierung |
| | 3B Durchbrechung | | 7L konischer Abschnitt |
| | 3C Vorsprung | | 7M erster Bereich |
| | 3D Einführschräge | | 7N zweiter Bereich |
| | 3E Verstärkungselement | | 7P Anschlagteller |
| 4 | Bauwerk | | 7Q Endabschnitt |
| | 4A Oberfläche | | 7R Gewindestift |
| | 4B Schicht | | 8 Spirale |
| | 4C Bohrung | | |
| 5 | Dübel | | |
| | 5A Dübelkopf | | |
| 6 | Schraube | | |
| | 6A Schraubenkopf | | |

## Patentansprüche

1. System (1) zur Befestigung von Dämmplatten (2) mittels Befestigungselementen (3) an einem Bauwerk (4), mit Dämmplatten (2), die mit Befestigungselementen (3) stoff- und/oder formschlüssig verbunden sind,
wobei die Befestigungselemente (3) jeweils eine Durchbrechung (3B) zur Verbindung des jeweiligen Befestigungselements (3) mit dem Bauwerk (4) aufweisen,
wobei die Befestigungselemente (3) zumindest im Wesentlichen bauwerksseitig oder bauwerksnah an oder in den Dämmplatten (2) angeordnet sind, und
wobei die Befestigungselemente (3) jeweils einen einstückig angeformten, sich an die Durchbrechung (3B) dämmplattenseitig anschließenden Vorsprung (3C) aufweisen, wobei die Befestigungselemente (3) mit dem Vorsprung (3C) jeweils in eine Bohrung bzw. Durchbrechung (2D) der Dämmplatte (2) eingreifen bzw. durch den Vorsprung (3C) als Positioniermittel koaxial dazu angeordnet sind,
**dadurch gekennzeichnet,**
**dass** der Vorsprung (3C) eine dämmplattenseitige Einführschräge (3D) aufweist, wobei die Einführschräge dazu geeignet ist, dass ein Dübel mit einem aufgeweiteten Kopfbereich dämmplattenseitig an der Einführschräge zur Anlage kommt.

2. System nach Anspruch 1, **dadurch gekennzeichnet, dass** die Befestigungselemente (3) zumindest im Wesentlichen flach, gitterartig, rippenartig, plattenartig und/oder tellerartig ausgebildet sind.

3. System nach einem der voranstehenden Ansprüche, **dadurch gekennzeichnet, dass** die Befestigungselemente (3) aus einem Material hergestellt sind, das härter, starrer und/oder steifer als der Dämmstoff der Dämmplatten (2) ist.

4. System nach einem der voranstehenden Ansprüche, **dadurch gekennzeichnet, dass** die Befestigungselemente (3) durch Verkleben mit den Dämmplatten (2) verbunden sind.

5. System nach einem der voranstehenden Ansprüche, **dadurch gekennzeichnet, dass** die Dämmplatten (2) und/oder die Befestigungselemente (3) Durchbrechungen (2D, 3B) aufweisen, so dass die Befestigungselemente (3) mit dem Bauwerk (4), insbesondere mittels Dübeln (5) und/oder Schrauben (6), verbindbar sind.

6. System nach einem der voranstehenden Ansprüche, **dadurch gekennzeichnet, dass** die Dämmplatten (2) jeweils Bohrungen bzw. Durchbrechungen (2D) aufweisen, wobei der die Bohrungen bzw. Durchbrechungen (2D) begrenzende Dämmstoff der Dämmplatten (2) eine Führung für ein Werkzeug (7) zur Verbindung der Befestigungselemente (3) mit dem Bauwerk (4), insbesondere mittels Dübeln (5) und/oder Schrauben (6), bildet.

7. System nach einem der voranstehenden Ansprüche, **dadurch gekennzeichnet, dass** der Vorsprung (3C) hülsenartig und/oder dickwandig ausgebildet ist und/oder dass die Einführschräge (3D) konisch ausgebildet ist

8. System nach einem der voranstehenden Ansprüche, **dadurch gekennzeichnet, dass** die Befestigungselemente (3) in den Ecken und/oder in der Mitte jeder Dämmplatte (2) angeordnet sind.

9. Verfahren zur Befestigung einer Dämmplatte (2) an einem Bauwerk (4) mittels eines Befestigungselements (3),
wobei das Befestigungselement (3) zumindest im Wesentlichen flach, plattenartig und/oder tellerartig ausgebildet ist, und
wobei das Befestigungselement (3) eine Durchbrechung (3B) zur Verbindung des Befestigungselements (3) mit dem Bauwerk (4) aufweist,
**dadurch gekennzeichnet,**
**dass** das Befestigungselement (3) einen einstückig angeformten, sich an die Durchbrechung (3B) dämmplattenseitig anschließenden Vorsprung (3C) mit einer dämmplattenseitigen Einführschräge (3D) aufweist und einer Bohrung bzw. Durchbrechung (2D) der Dämmplatte (2) zugeordnet wird,
**dass** das Befestigungselement (3) bauwerksseitig oder bauwerksnah an der Dämmplatte (2) angebracht oder in diese eingebracht wird und mittels des Vorsprungs (3C) koaxial zu der Bohrung bzw. Durchbrechung (2D) der Dämmplatte (2) angeordnet wird, so dass die Dämmplatte (2) mit dem Befestigungselement (3) Stoff- und/oder formschlüssig verbunden ist, und
**dass** das Befestigungselement (3) durch den Vorsprung (3C) und die Durchbrechung (3B) hindurch mit dem Bauwerk (4) verdübelt wird, wobei ein Dübel mit einem aufgeweiteten Kopfbereich dämmplattenseitig an der Einführschräge zur Anlage kommt.

10. Verfahren nach Anspruch 9, **dadurch gekennzeichnet, dass** das Befestigungselement (3) durch Kleben mit der Dämmplatte (2) verbunden wird.

11. Verfahren nach Anspruch 9 oder 10, **dadurch gekennzeichnet, dass** das Befestigungselement (3) vor dem Befestigen der Dämmplatte (2) an dem Bauwerk (4) mit der Dämmplatte (2) verbunden wird.

12. Verfahren nach einem der Ansprüche 9 bis 11, **dadurch gekennzeichnet, dass** das Befestigungselement (3) mit seiner Haupterstreckungsebene parallel zur Haupterstreckungsebene der Dämmplatte (2) an bzw. in der Dämmplatte 2 angeordnet wird.

13. Verfahren nach einem der Ansprüche 9 bis 12, **dadurch gekennzeichnet, dass** die mit dem Befestigungselement (3) versehene Dämmplatte (2) an dem Bauwerk (4) angeklebt und anschließend mit dem Bauwerk (4) durch eine Dübelverbindung verbunden wird.

## Claims

1. System (1) for fastening insulation panels (2) by means of fastening elements (3) on a structure (4), with insulation panels (2), which are connected with fastening elements (3) bonded and/or form-fit,
wherein the fastening elements (3) each have a through-hole (3B) for the connection of the respective fastening element (3) with the structure (4),
wherein the fastening elements (3) are arranged at least substantially on the structure side or close to the structure on or in the insulation panels (2), and
wherein the fastening elements (3) each have an integrally formed projection (3C) attached to the through-hole (3B) on the insulation panel side, wherein the fastening elements (3) engage with the projection (3C) in each case into a borehole or through-hole (2D) of the insulation panel (2) and/or are arranged coaxially thereto through the projection (3C) as a positioning means,
**characterized in**
**that** the projection (3C) has a lead-in chamfer (3D) on the insulation panel side, wherein the lead-in chamfer is suitable for a dowel with a widened head area on the insulation panel side coming to rest against the lead-in chamfer.

2. System according to claim 1, **characterized in that** the fastening elements (3) are designed at least substantially flat, lattice-like, rib-like, plate-like and/or disk-like.

3. System according to one of the preceding claims, **characterized in that** the fastening elements (3) are made from a material, which is harder, more rigid and/or stiffer than the insulating material of the insulation panels (2).

4. System according to one of the preceding claims, **characterized in that** the fastening elements (3) are connected with the insulation panels (2) by adhesive banding.

5. System according to one of the preceding claims, **characterized in that** the insulation panels (2) and/or the fastening elements (3) have through-holes (2D, 3B), so that the fastening elements (3) can be connected with the structure (4), in particular by means of dowels (5) and/or screws (6).

6. System according to one of the preceding claims, **characterized in that** the insulation panels (2) each have boreholes or through-holes (2D), wherein the insulating material of the insulation panels (2) limiting the boreholes or through-holes (2D) forms a guide for a tool (7) for connecting the fastening elements (3) with the structure (4), in particular by means of dowels (5) and/or screws (6).

7. System according to one of the preceding claims, **characterized in that** the projection (3C) is designed sleeve-like and/or thick-walled and/or that the lead-in chamfer (3D) is designed conically.

8. System according to one of the preceding claims, **characterized in that** the fastening elements (3) are arranged in the corners and/or in the center of each insulation panel (2).

9. Method for fastening an insulation panel (2) on a structure (4), by means of a fastening element (3),
wherein the fastening element (3) is designed at least substantially flat, plate-like and/or disk-like, and
wherein the fastening element (3) has a through-hole (3B) for connecting the fastening element (3) with the structure (4),
**characterized in**
**that** the fastening element (3) has an integrally formed projection (3C) attached to the through-hole (3B) on the insulation panel side with a lead-in chamfer (3D) on the insulation panel side and is assigned to a borehole or through-hole (2D) of the insulation panel (2),
**that** the fastening element (3) is attached on the structure side or close to the structure to the insulation panel (2) or is introduced into the latter and is arranged by means of the projection (3C) coaxially to the borehole or through-hole (2D) of the insulation panel (2), so that the insulation panel (2) is connected with the fastening element (3) bonded and/or form-fit, and
**that** the fastening element (3) is doweled through the projection (3C) and the through-hole (3B) with the structure (4), wherein a dowel with a widened head area on the insulation panel side comes to rest against the lead-in chamfer.

10. Method according to claim 9, **characterized in that** the fastening element (3) is connected with the insulation panel (2) by adhesive bonding.

11. Method according to claim 9 or 10, **characterized in that** the fastening element (3) is connected with the insulation panel (2) before the fastening of the insulation panel (2) to the structure (4).

12. Method according to one of claims 9 to 11, **characterized in that** the fastening element (3) is arranged with its main extension plane parallel to the main extension plane of the insulation panel (2) on or in the insulation panel (2).

13. Method according to one of claims 9 to 12, **characterized in that** the insulation panel (2) provided with the fastening element (3) is adhered to the structure (4) and subsequently is connected with the structure (4) through a dowel connection.

## Revendications

1. Système (1) destiné à la fixation de panneaux isolants (2) au moyen d'éléments de fixation (3) sur une construction (4), avec des panneaux isolants (2) qui sont raccordés à des éléments de fixation (3) par liaison de matière et/ou de forme,
les éléments de fixation (3) présentant respectivement une découpe (3B) pour le raccordement de l'élément de fixation (3) respectif à la construction (4),
les éléments de fixation (3) étant disposés au moins essentiellement côté construction ou à proximité de la construction sur ou dans les panneaux isolants (2), et
les éléments de fixation (3) présentant respectivement une saillie (3C) formée d'un seul tenant, se raccordant à la découpe (3B) côté panneau isolant, les éléments de fixation (3) engrenant avec la saillie (3C) respectivement dans un alésage ou respectivement une découpe (2D) du panneau isolant (2), ou respectivement étant disposés du fait de la saillie (3C) en tant que moyens de positionnement de façon coaxiale à ceux-ci,
**caractérisé**
**en ce que** la saillie (3C) présente un chanfrein d'introduction (3D) côté panneau isolant, le chanfrein d'introduction étant approprié pour qu'une cheville avec une zone de tête évasée vienne en appui contre le chanfrein d'introduction (3D) côté panneau isolant.

2. Système selon la revendication 1, **caractérisé en ce que** les éléments de fixation (3) sont au moins essentiellement constitués de façon plate, en forme de grille, de nervure, de plaque et/ou de plateau.

3. Système selon l'une des revendications précédentes, **caractérisé en ce que** les éléments de fixation (3) sont fabriqués dans un matériau qui est plus dur, plus rigide et/ou plus raide que le matériau isolant des panneaux isolants (2).

4. Système selon l'une des revendications précédentes, **caractérisé en ce que** les éléments de fixation (3) sont raccordés par collage aux panneaux isolants (2).

5. Système selon l'une des revendications précédentes, **caractérisé en ce que** les panneaux isolants (2) et/ou les éléments de fixation (3) présentent des découpes (2D, 3B) de telle sorte que les éléments de fixation (3) peuvent être raccordés à la construction (4), en particulier au moyen de chevilles (5) et/ou de vis (6).

6. Système selon l'une des revendications précédentes, **caractérisé en ce que** les panneaux isolants (2) présentent respectivement des alésages ou respectivement des découpes (2D), le matériau isolant des panneaux isolants (2) limitant les alésages ou respectivement les découpes (2D) formant un guidage pour un outil (7) pour le raccordement des éléments de fixation (3) à la construction (4), en particulier au moyen de chevilles (5) et/ou de vis (6).

7. Système selon l'une des revendications précédentes, **caractérisé en ce que** la saillie (3C) est constituée en forme de douille et/ou de paroi épaisse, et/ou **en ce que** le chanfrein d'introduction (3D) est constitué de façon conique.

8. Système selon l'une des revendications précédentes, **caractérisé en ce que** les éléments de fixation (3) sont disposés dans les angles et/ou au milieu de chaque panneau isolant (2).

9. Procédé de fixation d'un panneau isolant (2) sur une construction (4) au moyen d'un élément de fixation (3),
l'élément de fixation (3) étant au moins essentiellement constitué de façon plate, en forme de plaque et/ou de plateau, et
l'élément de fixation (3) présentant une découpe (3B) pour le raccordement de l'élément de fixation (3) à la construction (4),
**caractérisé**
**en ce que** l'élément de fixation (3) présente une saillie (3C) formée d'un seul tenant, se raccordant à la découpe (3B) côté panneau isolant, avec un chanfrein d'introduction (3D) côté panneau isolant, et est affecté à un alésage ou respectivement une découpe (2D) du panneau isolant (2),
**en ce que** l'élément de fixation (3) est mis en place sur le panneau isolant (2) côté construction ou près de la construction ou est mis en place dans le panneau isolant (2), et est disposé au moyen de la saillie (3C) de façon coaxiale à l'alésage ou respectivement à la découpe (2D) du panneau isolant (2) de telle sorte que le panneau isolant (2) est raccordé par liaison de matière et/ou de forme à l'élément de fixation (3), et
**en ce que** l'élément de fixation (3) est assemblé par chevillage à la construction (4) à travers la saillie (3C) et la découpe (3B), une cheville avec une zone de tête évasée venant, côté panneau isolant, en appui contre le chanfrein d'introduction.

10. Procédé selon la revendication 9, **caractérisé en ce que** l'élément de fixation (3) est raccordé par collage au panneau isolant (2).

11. Procédé selon la revendication 9 ou 10, **caractérisé en ce que** l'élément de fixation (3) est raccordé au panneau isolant (2) avant la fixation du panneau isolant (2) sur la construction (4).

12. Procédé selon l'une des revendications 9 à 11, **caractérisé en ce que** l'élément de fixation (3) est disposé avec son plan d'extension principal parallèlement au plan d'extension principal du panneau isolant (2) sur ou respectivement dans le panneau isolant (2).

13. Procédé selon l'une des revendications 9 à 12, **caractérisé en ce que** le panneau isolant (2) muni de l'élément de fixation (3) est collé sur la construction (4) et puis raccordé à la construction (4) par un raccordement chevillé.
